# FASCICULE DE BREVET EUROPEEN

(11) **EP 3 298 062 B1**
(45) Date de publication et mention de la délivrance du brevet: **22.05.2019**
(21) Numéro de dépôt: 16723423.6
(22) Date de dépôt: 20.04.2016
(51) Int. Cl.: C08G 61/08, C08G 61/12, C08L 65/00, C09J 165/00, C08G 75/14

(54) **POLYMERES HYDROCARBONES COMPRENANT DEUX GROUPEMENTS TERMINAUX (2-THIONE-1,3-OXATHIOLAN-4-YL)ALKYLOXYCARBONYLE**
KOHLENWASSERSTOFFPOLYMERE MIT ZWEI (2-THION-1,3-OXATHIOLAN-4-YL)ALKYLOXYCARBONYL-ENDGRUPPEN
HYDROCARBON POLYMERS COMPRISING TWO (2-THIONE-1,3-OXATHIOLAN-4-YL)ALKYLOXYCARBONYL END GROUPS

(30) Priorité: 20.05.2015 FR 1554501
(43) Date de publication de la demande: 28.03.2018
(73) Titulaire: Bostik SA, 92700 Colombes (FR); Université de Rennes I, 35065 Rennes Cedex (FR); Centre National de la Recherche Scientifique, 75016 Paris (FR)
(72) Inventeur: FOUQUAY, Stéphane, 76130 Mont Saint Aignan (FR); MICHAUD, Guillaume, 60200 Compiegne (FR); SIMON, Frédéric, 60400 Pont L'eveque (FR); CARPENTIER, Jean-François, 35690 Acigne (FR); GUILLAUME, Sophie, 35500 Vitre (FR); VANBIERVLIET, Elise, 49100 ANGERS (FR)
(74) Mandataire: Chahine, Audrey Claire
(86) Numéro de dépôt international: PCT/FR2016/050914
(87) Numéro de publication internationale: WO 2016/185106

(56) Documents cités:
- EP-A1- 1 233 030
- WO-A1-95/35290
- WO-A1-2005/016908
- WO-A1-2014/091173
- DATABASE CA [Online] CHEMICAL ABSTRACTS SERVICE, COLUMBUS, OHIO, US; 19 septembre 2013 (2013-09-19), YOSHIWARA, AKIHIKO: "Polymerizable composition, (crosslinkable) resin molding therefrom, and (crosslinked) resin composite molding with good adhesion to different materials therewith", XP002745123, extrait de STN Database accession no. 2013:1466222 -& WO 2013/137175 A1 (ZEON CORPORATION, JAPAN) 19 septembre 2013 (2013-09-19)

## Description

La présente invention se rapporte à des polymères hydrocarbonés comprenant deux groupements terminaux (2-thione-1,3-oxathiolan-4-yl)alkyloxycarbonyle (aussi désignés polymères hydrocarbonés à terminaisons « dithiocyclocarbonate » dans la présente demande), leur procédé de préparation et leur utilisation pour la fabrication de compositions de revêtements, de mastics ou d'adhésifs.

Il est connu d'utiliser des polyuréthanes pour fabriquer diverses compositions de revêtements, de mastics ou d'adhésifs.

Ces compositions peuvent être sous forme de compositions monocomposant ou bicomposant. Dans ce dernier cas, les réactifs nécessaires à la synthèse du polyuréthane, sont stockés de manière séparée, éventuellement en présence d'autres ingrédients (additifs), et sont destinés à être mélangés avant utilisation de la composition, pour synthétiser le polyuréthane au dernier moment.

La synthèse de polyuréthanes se fait traditionnellement par réaction d'un diisocyanate avec un diol.

Or les diisocyanates sont des composés toxiques en tant que tels, et sont généralement obtenus à partir de phosgène, lui-même très toxique par inhalation ou par contact. Le procédé de fabrication utilisé dans l'industrie met généralement en oeuvre la réaction d'une amine avec un excès de phosgène pour former un isocyanate.

De plus, les polyisocyanates sont des composés très sensibles en présence d'humidité atmosphérique et nécessitent de prendre des mesures appropriées pour éviter leur réticulation prématurée, et donc leur perte de réactivité, au cours de leur manipulation et de leur stockage (conditions anhydres).

La recherche d'alternatives à la synthèse de polyuréthanes, sans utiliser d'isocyanate (ou NIPU pour « Non Isocyanate PolyUrethane » en anglais, c'est-à-dire « polyuréthane sans isocyanate »), représente donc un enjeu majeur.

Cette recherche a fait l'objet de nombreuses études. Les pistes les plus étudiées concernent l'utilisation de polymères susceptibles de réagir avec des amines ou oligomères d'amines pour former des polyuréthanes ou dérivés structurellement proches des polyuréthanes, tels que des poly(thio)uréthanes, que l'on désignera génériquement dans la présente demande par « polymères de type polyuréthane ».

La demande de brevet WO 2014/091173 au nom de Bostik et du CNRS, décrit des polymères hydrocarbonés comprenant deux groupements terminaux à terminaison (2-oxo-1,3-dioxolan-4-yl) susceptibles d'être obtenus par polymérisation par ouverture de cycle par métathèse à partir d'au moins une cyclooléfine cyclique, au moins un agent de transfert de chaine insaturé non cyclique comprenant un groupement terminal (2-oxo-1,3-dioxolan-4-yl), et au moins un catalyseur de métathèse.

Ces polymères peuvent ensuite réagir avec une (poly)amine pour former des polyuréthanes sans isocyanate possédant des fonctions hydroxyle qui peuvent être utilisés pour formuler des compositions de revêtements, de mastics ou d'adhésifs. Toutefois, cette réaction est relativement longue et reste à améliorer.

L'exemple 4 de la demande de brevet WO 2014/091173 divulgue notamment la réaction d'une polyoléfine insaturée comprenant deux groupements terminaux (2-oxo-1,3-dioxolan-4-yl)méthyl oxycarbonyle avec une diamine primaire de type polyéther diamine, utilisés en proportions stoechiométriques, pour former un polyuréthane pouvant être formulé sous la forme d'une composition adhésive bicomposant. La durée de cette réaction est de 12 h à 80°C.

La demande de brevet WO 2005/016908 de HENKEL décrit la synthèse du dithiocyclocarbonate hydroxylé (DTC-OH) à 5 chaînons : 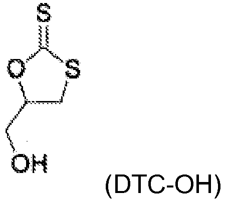 et ses diverses utilisations pour former entre autres, des synthons (thio)uréthanes possédant des groupes thiols et hydroxyles, destinés à la fabrication d'adhésifs, de revêtement surface ou de mastics:

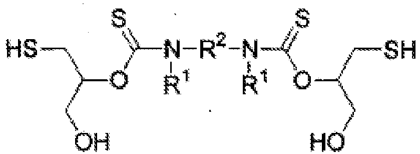

Ces synthons sont obtenus sans mise en oeuvre d'isocyanate, par réaction du (DTC-OH) avec une diamine. Ils peuvent ensuite être réticulés sur eux-même en présence de dioxygène et d'un catalyseur de réticulation pour atteindre des masses molaires supérieures à 500g/mol. Les poly(thio)uréthanes obtenus sont différents de ceux de la présente invention.

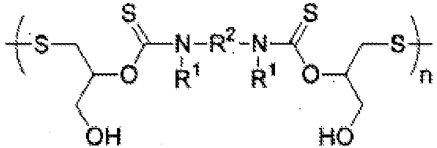

La demande de brevet WO 2005/016908 divulgue également l'utilisation du (DTC-OH) pour préparer des polyuréthanes usuels possédant deux groupes (2-thione-1,3-oxathiolan-4-yl)méthyloxycarbonyle terminaux (DTC-Polyuréthane) et de faibles masses molaires (inférieures à 2700 g/mol), mais leur fabrication met en oeuvre des isocyanates.

La présente invention a pour but de fournir de nouveaux intermédiaires de synthèse de polymères de type polyuréthane, destinés à la fabrication de compositions de revêtements, de mastics ou d'adhésifs, et remédiant en tout ou partie aux inconvénients de l'art antérieur.

En particulier, la présente invention a pour but de fournir de nouveaux intermédiaires dont la synthèse ne met pas en oeuvre d'isocyanates et sont capables de réagir plus rapidement avec une (poly)amine, par rapport aux polymères hydrocarbonés à terminaisons (2-oxo-1,3-dioxolan-4-yl) de la demande WO 2014/091173.

Ainsi, la présente invention concerne un polymère hydrocarboné comprenant deux groupements terminaux dithiocyclocarbonate, ledit polymère hydrocarboné étant de formule (1) suivante : 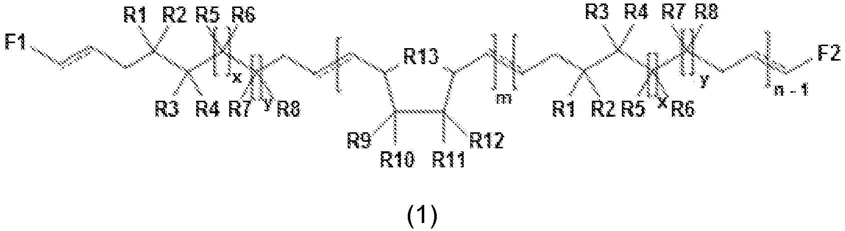 dans laquelle :
- chaque liaison carbone-carbone de la chaîne notée 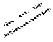 est une double liaison ou une simple liaison, en accord avec les règles de valence de la chimie organique ;
- les groupes R1, R2, R3, R4, R5, R6, R7 et R8, identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
- au moins un, et de préférence un, des groupes R1 à R8 pouvant faire partie d'un même cycle hydrocarboné ou hétérocycle, saturé ou insaturé, avec au moins un autre, et de préférence avec un autre, des groupes R1 à R8, selon les règles de valence de la chimie organique ;
- au moins une des paires (R1,R2), (R3,R4), (R5,R6) et (R7,R8) pouvant être un groupe oxo ;
- x et y, identiques ou différents, sont des nombres entiers compris dans une fourchette allant de 0 à 5, de préférence allant de 0 à 2, de façon encore plus préférée x est égal à 1 et y est égal à 1, la somme x + y étant de préférence comprise dans une fourchette allant de 0 à 4 et de façon encore plus préférée allant de 0 à 2 ;
- les groupes R9, R10, R11 et R12 identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
- au moins un des groupes R9 à R12 pouvant faire partie d'un même cycle hydrocarboné ou hétérocycle, saturé ou insaturé, avec au moins un autre des groupes R9 à R12, selon les règles de valence de la chimie organique ;
- le groupe R13 est CH₂, O, S, C(=O) ou NR₀, R₀ étant un groupe alkyle, de préférence linéaire, comportant de 1 à 22, de préférence de 1 à 14, atomes de carbone ; et
- n est un nombre entier supérieur ou égal à 2 et m est un nombre entier supérieur ou égal à 0, le rapport molaire m/n allant de 0/100 à 90/10, et de préférence allant de 25/100 à 75/25 ; n et m étant en outre tels que la masse molaire moyenne en nombre Mn du polymère hydrocarboné de formule (1) va de 500 à 50 000 g/mol, de préférence de 600 à 45 000 g/mol, plus préférentiellement de 700 à 40 000 g/mol, en particulier de 4000 à 30000 g/mol, et mieux encore de 8000 à 20 000 g/mol, et la polymolécularité (PDI) du polymère hydrocarboné de formule (1) allant de 1,0 à 3,0, de préférence de 1,0 à 2,0 ;
- F1 est représenté par la formule suivante : 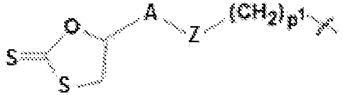
- et F2 est représenté par la formule suivante : 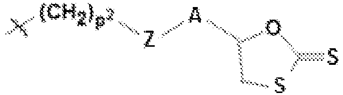 dans lesquelles :
   A est un groupe alkylène en C1 à C9 et de préférence méthylène ;
   Z est tel que le groupe divalent -A-Z- sus-décrit est le groupe -A-C(=O)O- ou -A-OC(=O)- et de préférence -A-C(=O)O- ;
   p1 et p2, identiques ou différents, représentent chacun un nombre entier égal à 0, 1, 2 ou 3 et de préférence p1 = p2 = 0.

Bien évidemment, toutes les formules sont données ici en accord avec les règles de valence de la chimie organique.

La chaîne principale du polymère de formule (1) comporte donc un ou deux types d'unités de répétition, un premier type d'unité de répétition répété n fois et un second type d'unité de répétition, optionnel, répété m fois.

Ainsi qu'il apparaît ci-dessus, les groupements terminaux F1 et F2 sont généralement symétriques par rapport à la chaîne principale, c'est-à-dire qu'ils se correspondent sensiblement, à l'exception des indices p1 et p2.

Selon un premier mode de réalisation où F1 et F2 sont identiques ou différents :
- Z est tel que F1 et F2 sont : 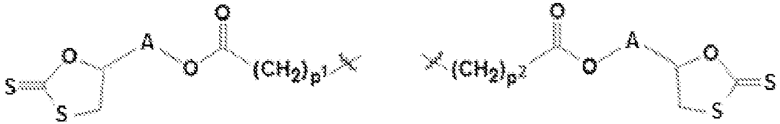
- p1 et p2 sont des nombres entiers allant de 0 à 3, de préférence p1 ou p2 = 0, et plus préférentiellement p1 = p2 = 0,
- A est un groupe alkylène en C1 à C9, de préférence un groupe méthylène.

Selon un deuxième mode de réalisation où F1 et F2 sont identiques ou différents :
- Z est tel que F1 et F2 sont : 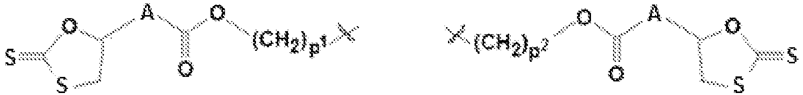
- p1 et p2 sont des nombres entiers allant de 1 à 3, de préférence p1 ou p2 = 1, et plus préférentiellement p1 = p2 = 1,
- A est un groupe alkylène en C1 à C9 de préférence un groupe méthylène.

Selon un autre mode de réalisation préféré de l'invention, x est égal à 1 et y est égal à 1.

Dans la présente demande, en l'absence d'indication contraire :
- Par « groupement terminal », on entend un groupement situé en bout de chaîne (ou extrémité de la chaine principale) d'un polymère essentiellement linéaire. Le polymère linéaire selon l'invention comprend une chaîne principale, dont les deux extrémités sont les groupements terminaux du polymère selon l'invention.
- Par « groupement dithiocyclocarbonate », on entend un groupe F1 ou F2 tel que décrit précédemment.
- Par « groupe alkyle », on entend un composé hydrocarboné linéaire ou ramifié, cyclique (incluant polycyclique) ou acyclique, et comprenant sauf indication contraire généralement de 1 à 22 atomes de carbone. Un tel groupe alkyle comprend le plus souvent de 1 à 14, de préférence de 1 à 8, atomes de carbone.
- Par « groupe hétéroalkyle », on entend selon l'invention un groupe alkyle dans lequel au moins un des atomes de carbone est substitué par un hétéroatome choisi dans le groupe formé par O et S.
- Par « groupe alcoxycarbonyle », on entend un groupe (monovalent) alkyle, linéaire ou ramifié, saturé ou partiellement insaturé, comprenant de 1 à 22, de préférence de 1 à 14, atomes de carbone, ainsi qu'un groupe divalent-COO-.
- Par « groupe hétéroalcoxycarbonyle », on entend selon l'invention un groupe alcoxycarbonyle dans lequel au moins un des atomes de carbone est substitué par un hétéroatome choisi dans le groupe formé par O et S.
- Par « atome d'halogène », on entend un groupe iodo, chloro, bromo ou fluoro, de préférence chloro.
- Par « cycle hydrocarboné », on entend un composé hydrocarboné cyclique (incluant polycyclique), saturé ou insaturé, pouvant comporter de 3 à 22 atomes de carbone et éventuellement au moins un groupe C=O.
- Par « hétérocycle », on entend un cycle hydrocarboné pouvant comprendre un autre atome que le carbone dans la chaîne du cycle, tel que par exemple l'oxygène, le soufre ou le groupe NR₀ tel que défini précédemment, à savoir un groupe alkyle, de préférence linéaire, comportant de 1 à 22, de préférence de 1 à 14, atomes de carbone.
- Par « au moins un des groupes R1 à R8 pouvant faire partie d'un même cycle hydrocarboné ou hétérocycle, saturé ou insaturé, avec au moins un autre des groupes R1 à R8, selon les règles de valence de la chimie organique », on entend selon l'invention que ces groupes, qu'ils soient portés ou non par le même carbone, sont liés ensemble par une chaîne hydrocarbonée (pouvant inclure les atomes de carbone de la chaine principale du polymère de formule (1)) comportant éventuellement au moins un groupe un groupe C=O et/ou au moins un hétéroatome tel que S ou O, de manière à former un cycle hydrocarboné ou un hétérocycle, tels que définis ci-dessus. Dans certains cas, ces groupes peuvent désigner des liaisons chimiques. Par exemple, lorsque l'un des groupes R3 ou R4 avec l'un des groupes R5 ou R6 forment ensemble avec les atomes de carbone de la chaine principale du polymère de formule (1) les supportant, un cycle époxyde, ceux-ci désignent une liaison reliant l'atome de carbone les supportant à l'atome d'oxygène du groupe époxy. Ces définitions sont également applicables aux groupes R13 à R16.
- Par « paire (R1,R2) pouvant être un groupe oxo », on entend selon l'invention que la paire (R1,R2) est telle que 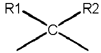 est 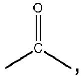
où C est l'atome de carbone qui supporte les deux groupes formant la paire (R1,R2). Cela est également applicable aux paires (R3,R4), (R5,R6) et (R7,R8).

La polymolécularité PDI (ou dispersité *Ð*_{M}) est définie comme le rapport Mw / Mn, c'est-à-dire le rapport de la masse molaire moyenne en poids du polymère à la masse molaire moyenne en nombre dudit polymère.

Les deux masses molaires moyennes Mn et Mw sont mesurées selon l'invention par chromatographie d'exclusion stérique (ou SEC, acronyme de « Size Exclusion Chromatography » en anglais), usuellement avec étalonnage PEG (PolyEthylèneGlycol) ou PS (PolyStyrène), de préférence PS.

Les mesures sont généralement réalisées dans un solvant permettant de solubiliser l'échantillon à analyser. Les différents polymères de l'invention peuvent être solubilisés par exemple dans du dichlorométhane (DCM) ou du tétrahydrofurane (THF).

De préférence les groupes R5 à R8 sont chacun un atome d'hydrogène. Plus préférentiellement, les groupes R1 à R8 sont des atomes d'hydrogène.

Si p1 = 0 ou p2 = 0, alors il n'y a pas de groupe divalent (CH₂)ₚ₁ ou (CH₂)ₚ₂ dans la formule F1 ou F2 et -(CH₂)ₚ₁- devient une liaison simple « - » ou -(CH₂)ₚ₂- devient une liaison simple « - ».

Lorsque l'indice m, n ou n-1, x ou y, qui s'applique à un ensemble de deux crochets est égal à zéro, cela signifie qu'il n'y a pas de groupe entre les crochets auxquels cet indice s'applique. Ainsi, 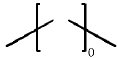 signifie « 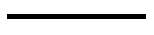 » (liaison simple), et 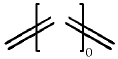 signifie « 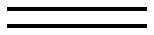 » (liaison double).

Chacune des doubles liaisons du polymère de formule (1) est orientée géométriquement cis ou trans, et est de préférence d'orientation cis. Les isomères géométriques du polymère de formule (1) sont généralement présents en proportions variables, avec le plus souvent une majorité de cis (Z) et préférentiellement toutes les doubles liaisons sont orientées cis (Z). Il est aussi possible selon l'invention d'obtenir un seul des isomères géométriques, selon les conditions réactionnelles et en particulier selon la nature du catalyseur utilisé.

Les polymères de formule (1) selon l'invention peuvent être des polymères solides ou des polymères liquides (très fluides), à température ambiante (environ 23 °C).

De préférence, ce sont des polymères liquides à 23 °C, c'est-à-dire ayant une viscosité allant de 1 à 500 000 mPa.s à 23°C.

De manière générale, la viscosité peut être mesurée de manière bien connue de l'homme du métier. En particulier, la viscosité peut être mesurée avec un viscosimètre Brookfield, en choisissant l'aiguille et la vitesse du module de manière appropriée en fonction de la gamme de viscosité à mesurer.

Selon une variante de l'invention, lorsque m est égal à 0, le polymère de formule (1) peut être représenté par la formule (2) suivante : 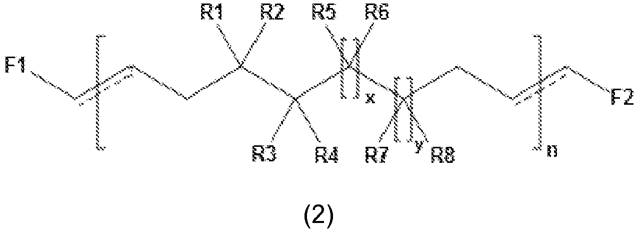 dans laquelle : x, y, n, F1, F2, R1 à R8 sont tels que décrit dans l'un quelconque des paragraphes précédents.

La formule (2) illustre le cas où la chaîne principale du polymère de formule (1) comporte un seul type d'unité de répétition, répétée n fois.

Lorsque selon une variante préférée de cette variante, m est égal à 0 et R1 à R8 désignent des atomes d'hydrogène, avec au moins une des paires (R1,R2), (R3,R4), (R5, R6) et/ou (R7,R8) pouvant désigner un groupe oxo, le polymère de formule (2) est solide à température ambiante.

Selon une autre variante de l'invention, de préférence :
- m est différent de zéro
   et/ou
- l'un au moins des groupes R1 à R8 et/ou R9 à R12 comporte un groupement alkyle (et donc désigne un groupe différent d'un atome d'hydrogène et d'un atome d'halogène)
   ou
- au moins un des groupes R1 à R8 fait partie d'un même cycle hydrocarboné ou hétérocycle, saturé ou insaturé, avec au moins un autre des groupes R1 à R8, selon les règles de valence de la chimie organique,
   avec
- au moins une des paires (R1,R2), (R3,R4), (R5,R6) et/ou (R7,R8) pouvant désigner un groupe oxo.

Dans ce cas, le polymère de formule (1) est liquide à température ambiante.

L'invention concerne aussi des polymères hydrocarbonés à terminaisons dithiocyclocarbonate de formule (1H) et (2H) où les chaînes principales des polymères de formule (1) et (2) sont saturées, c'est-à-dire qu'elles ne comportent que des liaisons saturées : 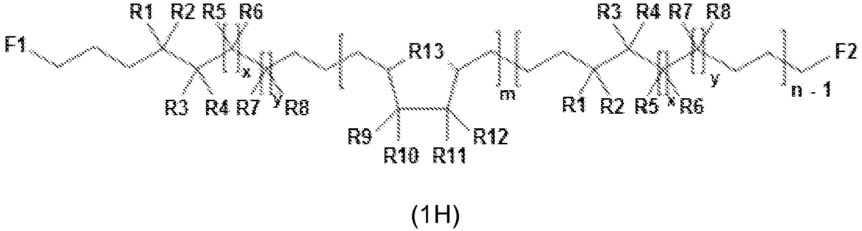 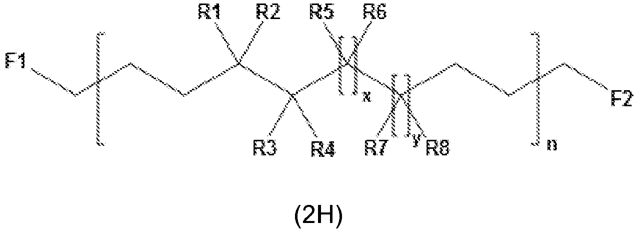 dans lesquelles : x, y, n, m, F₁, F₂, R1 à R13, sont tels que décrit dans l'un quelconque des paragraphes précédents.

Les polymères de formule (1H) et (2H) peuvent être préparés par hydrogénation des polymères insaturés diépoxydés de formules (1E) et (2E) définis ci-après, puis réaction des polymères ainsi hydrogénés avec du disulfure de carbone (CS₂): 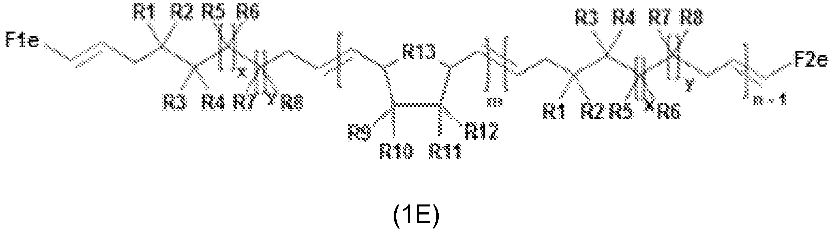 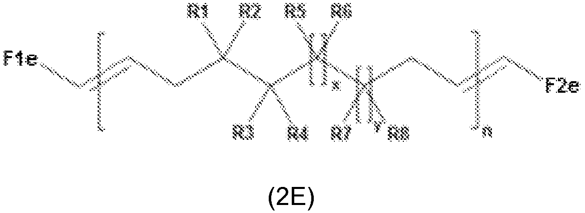 dans lesquelles :
- R1 à R8, x, y, n des formules (1E) et (2E) ont les mêmes significations que données précédemment,
- F1e est représenté par la formule suivante : 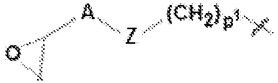
- F2e est représenté par la formule suivante : 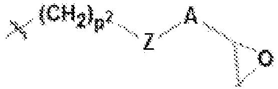
- A, Z, p1 et p2 des formules F1e et F2e ont les mêmes significations que données précédemment.

L'invention concerne encore un procédé de préparation d'au moins un polymère hydrocarboné comprenant deux groupements terminaux dithiocyclocarbonate selon l'invention, ledit procédé comprenant au moins :
I) une étape de polymérisation par ouverture de cycle par métathèse (ou « Ring-Opening Metathesis Polymerization» en anglais), en présence :
   - d'au moins un catalyseur de métathèse, de préférence un catalyseur comprenant du ruthénium, de façon encore plus préférée un catalyseur de type « Grubbs »,
   - d'au moins un agent de transfert de chaîne (CTA pour « Chain Transfer Agent » en anglais) mono ou di-époxydé respectivement de formule (C1) ou (C2) suivante : 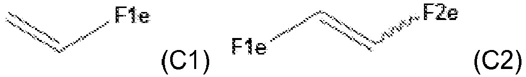 dans lesquelles :
      - F1e est représenté par la formule suivante : 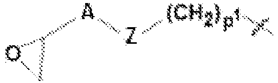
      - et F2e est représenté par la formule suivante : 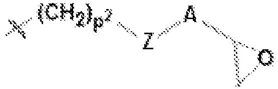
      - A, Z, p1 et p2 des formules F1e et F2e sont tels que définis dans l'un quelconque des paragraphes précédents,
      - la liaison 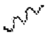 est une liaison simple carbone-carbone orientée géométriquement d'un côté ou de l'autre par rapport à la double liaison (cis ou trans) dans la formule (C2) ;
   - d'au moins un composé de formule (A) suivante : 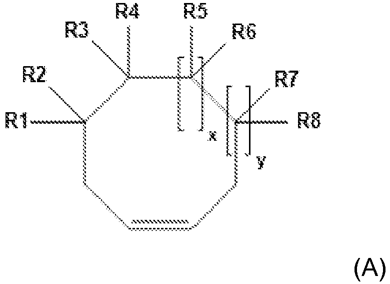 dans laquelle :
      - les groupes R1, R2, R3, R4, R5, R6, R7 et R8, identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
      - au moins un des groupes R1 à R8 pouvant faire partie d'un même cycle hydrocarboné ou hétérocycle, saturé ou insaturé, avec au moins un autre des groupes R1 à R8, selon les règles de valence de la chimie organique, et
      - au moins une des paires (R1,R2), (R3,R4), (R5,R6) et (R7,R8) pouvant être un groupe oxo ;
      - x et y sont des nombres entiers indépendamment allant de 0 à 5, de préférence allant de 0 à 2, de façon encore plus préférée x est égal à 1 et y est égal à 1, la somme x + y allant de préférence de 0 à 4 et de façon encore plus préférée de 0 à 2 ; et
   - d'éventuellement au moins un composé de formule (B) : 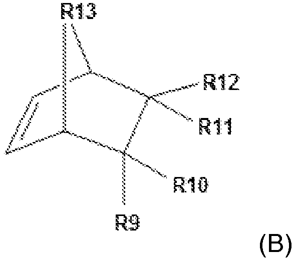 dans laquelle :
      - les groupes R9, R10, R11 et R12, identiques ou différents, sont choisis parmi un atome d'hydrogène, un atome d'halogène, un groupe hétéroalkyle, un groupe alcoxycarbonyle et un groupe hétéroalcoxycarbonyle,
      - au moins un, et de préférence un, des groupes R9 à R12 pouvant faire partie d'un même cycle ou hétérocycle saturé ou insaturé avec au moins un autre, et de préférence avec un autre, des groupes R9 à R12, selon les règles de valence de la chimie organique ; et
      - le groupe R13 est CH₂, O, S, C(=O) ou NR₀, R₀ étant un groupe alkyle, de préférence linéaire, comportant de 1 à 22, de préférence de 1 à 14, atomes de carbone ;
      pendant une durée de réaction allant de 2 à 24 h et à une température allant de 20 à 60 °C ; puis
II) une étape de dithiocarbonation du polymère obtenu à l'étape précédente par réaction avec du disulfure de carbone (CS₂) en présence d'un composé halogéné du lithium, tel que le bromure de lithium, à une température allant de 20 à 45°C, jusqu'à obtention du polymère hydrocarboné comprenant deux groupements terminaux dithiocyclocarbonate selon l'invention.

Lorsque le polymère hydrocarboné comprenant deux groupements terminaux dithiocyclocarbonate selon l'invention possède une chaine principale saturée, tel qu'envisagé par les formules (1H) et (2H) définies précédemment, le procédé de préparation ci-dessus comprend entre les étapes I) et II), une étape d'hydrogénation sélective des doubles liaisons du polymère issu de l'étape I) possédant deux groupements époxy terminaux et correspondant au polymère insaturé diépoxydés de formule (1E) ou (2E). L'hydrogénation sélective du polymère de formule (1E) ou (2E) issu de l'étape I) possédant deux groupements époxy terminaux, conduisant au polymère hydrogéné correspondant de formule (1H) ou (2H) respectivement, peut être réalisée selon le procédé décrit dans la demande WO 9,535,290 de EASTMAN CHEMICAL.

La polymérisation par ouverture de cycle par métathèse (ou ROMP pour « Ring-Opening Metathesis Polymerization » en anglais) est une réaction bien connue de l'homme du métier.

La durée et la température pour réaction de polymérisation décrite à l'étape I) dépendent généralement des conditions de réaction et en particulier du taux de charge catalytique. L'homme du métier est à même de les adapter en fonction des circonstances.

Dans la présente demande, la réaction de polymérisation par ouverture de cycle par métathèse est mise en oeuvre en présence d'un CTA mono-fonctionnel de formule (C1) ou d'un CTA difonctionnel de formule (C2).

Le CTA de formule (C1) est dit monofonctionnel lorsqu'il comporte un groupement époxydé.

Le CTA de formule (C2) est dit difonctionnel lorsqu'il comporte deux groupements époxydé, pouvant être identiques ou différents.

Selon un premier mode de réalisation du procédé de préparation selon l'invention (appelé « voie CTA monofonctionnel »), le CTA utilisé est de formule (C1).

Selon une première variante du procédé de préparation selon l'invention selon la « voie CTA monofonctionnel », le CTA de formule (C1) correspond à la formule (C1a) suivante: 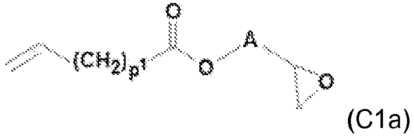 dans laquelle :
- p1 est un nombre entier allant de 0 à 3, et de préférence égal à 0,
- A est un groupe alkylène en C1 à C9, de préférence un groupe méthylène.

Le composé de formule (C1a) peut être obtenu selon le schéma (1) ci-dessous, dans lequel p1 et A conservent les significations données ci-dessus, et en suivant le mode opératoire décrit dans la demande de brevet CN 102,757,409, :

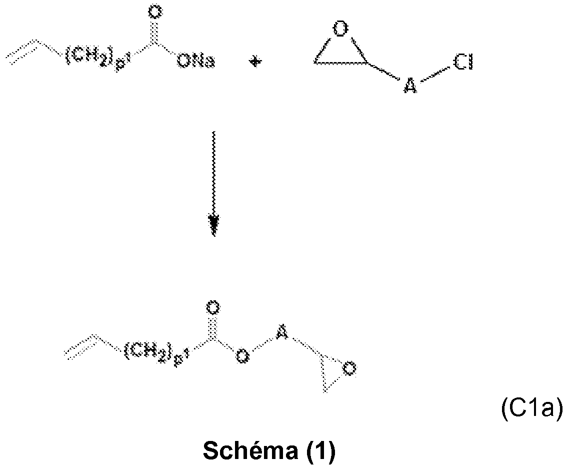

Selon une deuxième variante du procédé de préparation selon l'invention selon la « voie CTA monofonctionnel », le CTA de formule (C1) correspond à la formule (C1b) suivante : 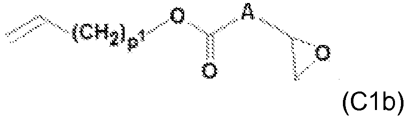 dans laquelle :
- p1 est un nombre entier allant de 1 à 3, et de préférence égal à 1,
- A est un groupe alkylène en C1 à C9, de préférence un groupe méthylène.

Le composé de formule (C1b) peut être obtenu par trans-estérification selon le schéma (2) ci-dessous, dans lequel p1 et A conservent les mêmes significations que données précédemment, et Me désigne le groupe méthyle, et en suivant l'un des modes opératoires décrits dans la publication intitulée « Kinetics of Epoxidation of Alkyl Esters of Undecylenic Acid : Comparison of Traditional Routes vs. Ishii-Venturello Chemistry » de G.D. Yadav et D.V. Satoskar (JAOCS, Vol.74, no.4 (1997), pages 397-407), notamment ceux décrits aux tableaux 9 et 10:

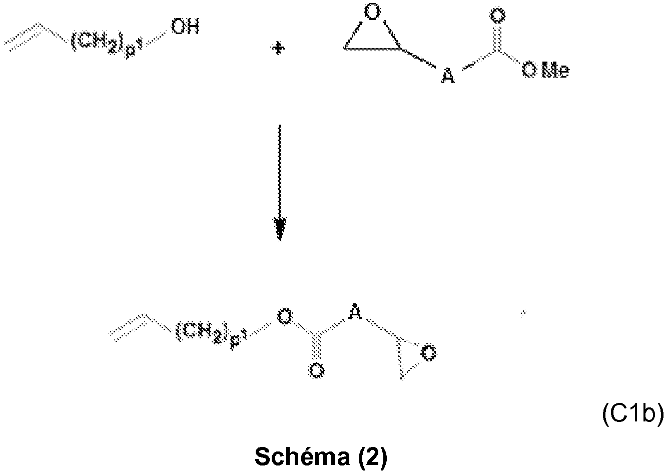

Les époxy alcanoates utilisés dans cette réaction peuvent être synthétisés en suivant les modes opératoires décrits dans les demandes de brevet US 3,448,125 de ROHM & HAAS et EP 0,208,272 de MONTEDISON.

Selon un deuxième mode de réalisation du procédé de préparation selon l'invention (appelé « voie CTA difonctionnel »), le CTA utilisé est de formule (C2).

Selon une première variante du procédé de préparation selon l'invention selon la « voie CTA difonctionnel », le CTA de formule (C2) correspond à la formule (C2a) suivante : 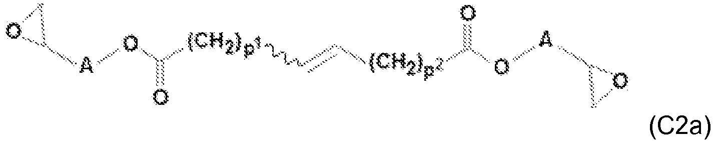 dans laquelle :
- 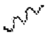 a la même signification que donnée précédemment ;
- p1 et p2 sont des nombres entiers allant de 0 à 3, de préférence p1 ou p2 = 0, et plus préférentiellement p1 = p2 = 0,
- A est un groupe alkylène en C1 à C9, de préférence un groupe méthylène.

Le composé de formule (C2a) peut être obtenu selon le schéma (3) ci-dessous, correspondant à une variante originale du schéma (1) dans lequel p1, p2, A et 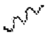 conservent les mêmes significations que données précédemment.

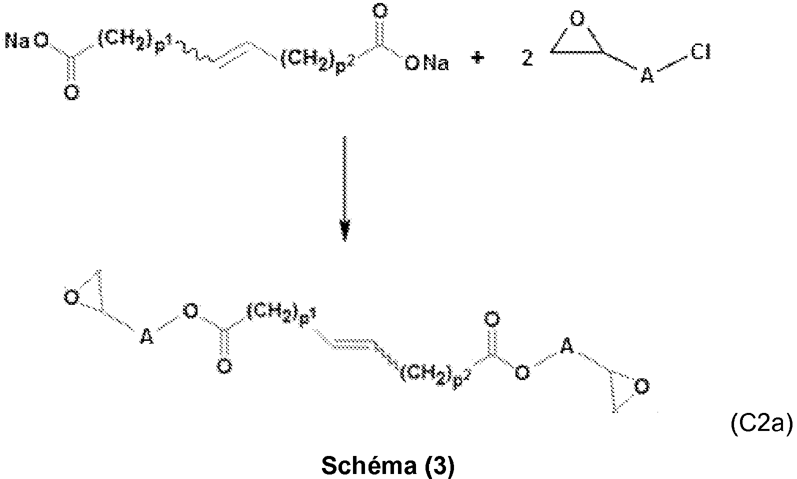

Selon une deuxième variante du procédé de préparation selon l'invention selon la « voie CTA difonctionnel », le CTA de formule (C2) correspond à la formule (C2b) suivante : 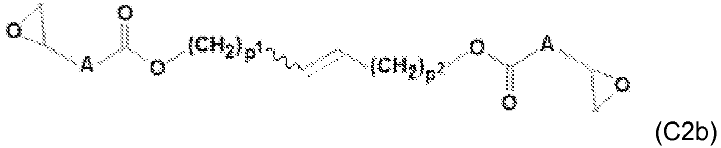 dans laquelle :
- 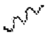 a la même signification que donnée précédemment ;
- p1 et p2 sont des nombres entiers allant de 1 à 3, de préférence p1 ou p2 = 1, et plus préférentiellement p1 = p2 = 1,
- A est un groupe alkylène en C1 à C9, de préférence un groupe méthylène.

Le composé de formule (C2b) peut être obtenu selon le schéma (4) ci-dessous, correspondant à une variante originale du schéma (2) dans lequel p1, p2, A et 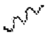 conservent les mêmes significations que données précédemment, et Me désigne le groupe méthyle:

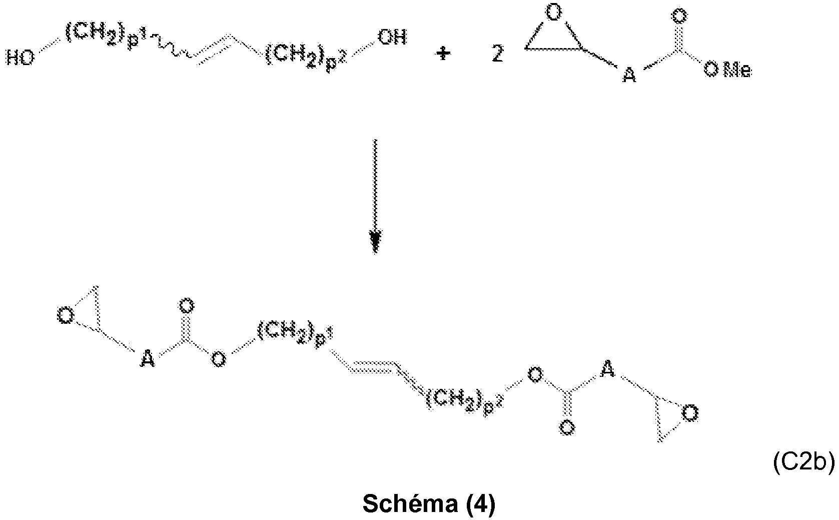

Le rapport molaire du CTA de formule (C1) sur le composé de formule (A), ou sur la somme des composés de formules (A) et (B) si le composé de formule (B) est présent, va de 1.10⁻³ à 1,0 et de préférence de 1.10⁻² à 0,250.

Le rapport molaire du CTA de formule (C2) sur le composé de formule (A), ou sur la somme des composés de formules (A) et (B) si le composé de formule (B) est présent, va de 0,5.10⁻³ à 0,5 et de préférence de 0,5.10⁻² à 0,125.

Les composés de formule (A) comprennent généralement de 6 à 30, de préférence de 6 à 22, atomes de carbone.

De préférence, les composés de formule (A) sont tels que x = y = 1.

Plus préférentiellement, les composés cycliques de formule (A) selon l'invention, sont choisis dans le groupe formé par le cycloheptène, le cyclooctène, le cyclononène, le cyclodécène, le cycloundécène, le cyclododécène, le 1,5-cyclooctadiène, le cyclononadiène, le 1,5,9-cyclodécatriène, les 5-alkyl-cyclooctènes dont la partie alkyle en C1-C22, et préférence en C1-C14, et leurs mélanges. Le cyclooctène (COE) 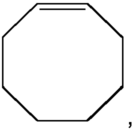 et les 5-alkyl-cyclooctène 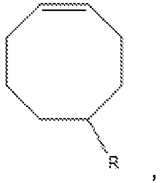 où R est un groupe alkyle comprenant de 1 à 22, de préférence 1 à 14, atomes de carbone, sont préférés selon l'invention ; le cyclooctène étant tout particulièrement préféré. Par exemple, R est un groupe *n*-hexyle.

Les composés de formule (B) comprennent généralement de 6 à 30, de préférence de 6 à 22, atomes de carbone.

Plus préférentiellement, les composés cycliques de formule (B) sont choisis dans le groupe formé par les norbornène (NBN), dicyclopentadiène et 7-oxanorbornène qui sont respectivement de formules suivantes :

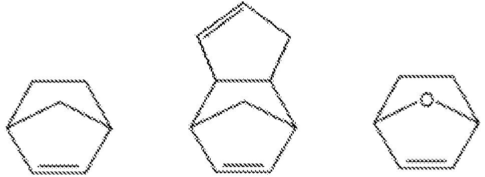

Les composés cycliques de formule (B) peuvent également être choisis dans le groupe formé par les composés de formules suivantes : 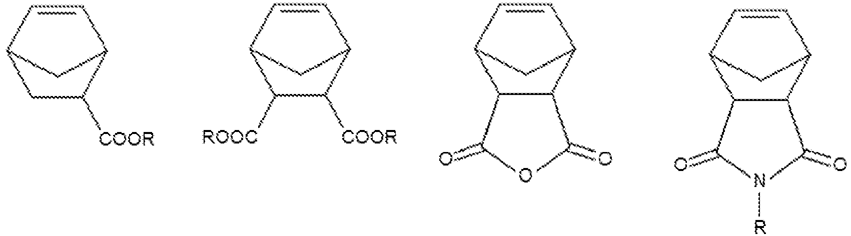 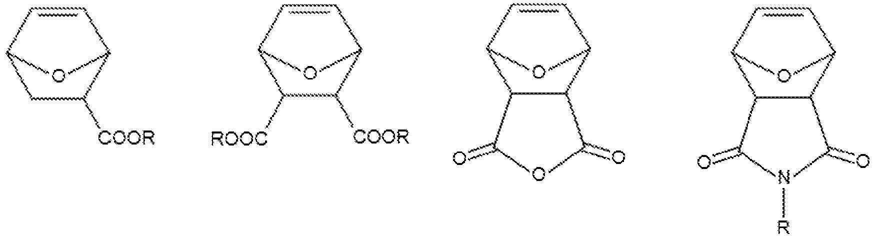 dans lesquelles : R est un groupe alkyle comprenant de 1 à 22, de préférence 1 à 14, atomes de carbone. Par exemple, R est un groupe n-hexyle.

Les composés cycliques de formule (B) peuvent également être choisis dans le groupe formé par les produits d'addition (ou adducts en anglais) issus de la réaction de Diels-Alder utilisant le cyclopentadiène ou le furane comme produit de départ, ainsi que les composés dérivés du norbornène tels que décrits dans WO 2001/04173 (tels que : carboxylate d'isobornyle norbornène, carboxylate de phényle norbornène, carboxylate d'éthylhéxyle norbornène, carboxylate de phénoxyéthyle norbornène et alkyle dicarboxymide norbornène, l'alkyle comportant le plus souvent de 3 à 8 atomes de carbone) et ceux décrits dans WO 2011/038057 (anhydrides dicarboxyliques de norbornène et éventuellement anhydrides dicarboxyliques de 7-oxanorbornène).

L'étape I) de polymérisation par ouverture de cycle par métathèse est mise en oeuvre le plus souvent en présence d'au moins un solvant, généralement choisi dans le groupe formé par les solvants aqueux ou organiques typiquement utilisés dans les réactions de polymérisation et qui sont inertes dans les conditions de la polymérisation sus-décrites.

L'étape II) de dithiocarbonation et/ou l'étape optionnelle d'hydrogénation, peuvent être mise en oeuvre dans le même solvant que l'étape I).

En particulier, lorsque le même solvant est utilisé, le polymère hydrocarboné à terminaisons dithiocyclocarbonate selon l'invention peut être généré en mettant en oeuvre successivement l'étape I) et l'étape II), sans avoir à isoler le polymère à terminaisons époxy de formule (1E) ou (2E) issu de l'étape I) entre les deux étapes.

A titre d'exemple de solvant pouvant être mis en oeuvre, on peut citer les hydrocarbures aromatiques, les hydrocarbures chlorés, les éthers, les hydrocarbures aliphatiques, les alcools, l'eau ou leurs mélanges.

De préférence, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, l'eau ou leurs mélanges.

Plus préférentiellement, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, et leurs mélanges.

Mieux encore, le solvant est le toluène, l'heptane, ou un mélange de toluène et de chlorure de méthylène. La solubilité du polymère formé au cours de la réaction de polymérisation dépend généralement et principalement du choix du solvant et de la masse molaire du polymère obtenu. Il est aussi possible que la réaction soit mise en oeuvre sans solvant.

Le catalyseur de métathèse, tel que par exemple un catalyseur de type « Grubbs », est généralement un produit du commerce.

Le catalyseur de métathèse est le plus souvent un catalyseur comprenant au moins un métal de transition, tel que le ruthénium, le plus souvent sous la forme de complexe.

De préférence, le catalyseur de métathèse est choisi parmi les complexes du ruthénium tel qu'un complexe ruthénium-carbène.

Plus préférentiellement, le catalyseur de métathèse est choisi parmi les catalyseurs de type « Grubbs ».

Par « catalyseur de type Grubbs », on entend généralement selon l'invention un catalyseur de Grubbs 1^{ère} ou 2^{ème}, mais aussi tout autre catalyseur de type Grubbs (de type ruthénium-carbène) accessible à l'homme du métier, tel que par exemple les catalyseurs de Grubbs substitués décrits dans le brevet US 5,849,851.

Un catalyseur de Grubbs 1^{ère} génération est généralement de formule (G1) : 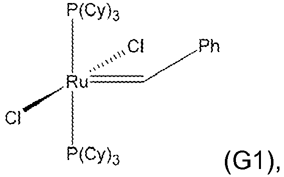 dans laquelle :
- Ph est le groupe phényle
- Cy est le groupe cyclohexyle, et
- P(Cy)₃ est un groupe tricyclohexylphosphine.

La dénomination IUPAC du catalyseur (G1) est : benzylidène-bis(tricyclohexylphosphine) dichlororuthénium (de numéro CAS 172222-30-9).

Un catalyseur de Grubbs 2^{ème} génération est généralement de formule (G2) : 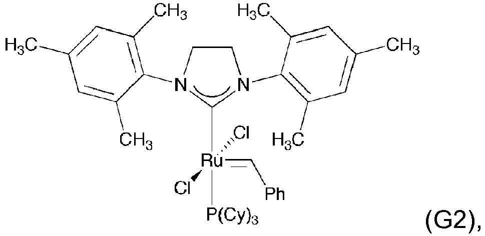 dans laquelle :
- Ph est le groupe phényle,
- Cy est le groupe cyclohexyle, et
- P(Cy)₃ est un groupe tricyclohexylphosphine.

La dénomination IUPAC du catalyseur (G2) est : benzylidène [1,3-bis(2,4,6-triméthylphényl)-2-imidazolidinylidène]dichloro(tricyclohexylphosphine) ruthénium (de numéro CAS 246047-72-3).

De préférence, le catalyseur est un catalyseur de Grubbs 2^{ème} génération, tel que défini par exemple par la formule (G2).

Généralement, le disulfure de carbone (CS₂) et le polymère à terminaisons époxy issu de l'étape précédente sont utilisés en proportion stoechiométrique, c'est-à-dire que deux moles de disulfure de carbone sont mis à réagir avec une mole de polymère à terminaison époxy issu de l'étape précédente, de manière à ce que l'ensemble des fonctions époxy dudit soit réagi avec du disulfure de carbone. Une légère variation par rapport aux stoechiométries données précédemment, notamment un léger défaut de CS₂, peut être envisagé(e) sans inconvénient. Dans ce dernier cas, il peut être envisagé de travailler par exemple avec rapport molaire de la quantité de CS₂ sur la quantité de polymère à terminaisons époxy issu de l'étape précédente allant de 0,96 à 1.

L'invention concerne également un procédé de préparation de poly(thio)uréthane comprenant la réaction d'au moins un polymère hydrocarboné à terminaisons dithiocyclocarbonate selon l'invention, susceptible notamment d'être obtenu par le procédé de préparation selon l'invention, avec au moins un composé comprenant au moins un, de préférence au moins deux, groupements amines, par exemple choisi parmi les monoamines, les diamines, les triamines et les autres polyamines ; ainsi que les poly(thio)uréthanes susceptibles d'être obtenus par ce procédé de préparation.

Par « poly(thio)uréthane », on entend dans la présente demande un polymère comprenant au moins deux groupes (thio)uréthane, dont la définition est donnée ci-après.

Par « groupe (thio)uréthane », on entend dans la présente demande un groupe S-thiocarbamate, répondant notamment à la formule -O(C=S)-NH-.

Les composés aminés utilisables selon l'invention sont de préférence tels qu'au moins un groupement amine, de préférence tous les groupements amines, sont des groupements amines primaires. Ces composés aminés peuvent être des oligomères. Ces oligomères ont généralement une masse molaire moyenne en nombre inférieure à 2000 g/mol.

La réaction de synthèse du poly(thio)uréthane selon l'invention peut avoir lieu à une température inférieure à 100 °C, voire à température ambiante (c'est-à-dire environ 23 °C) lorsque le polymère hydrocarboné à terminaisons dithiocyclocarbonate utilisé est liquide à 23°C.

Il a été observé que dans des conditions de températures identiques, et en présence du même composé aminé, cette réaction de synthèse selon l'invention était plus rapide que celle mettant en oeuvre un polymère hydrocarboné à terminaisons (2-oxo-1,3-dioxolan-4-yl) selon la demande WO 2014/091173.

Le procédé de préparation sus-décrit peut donc être avantageusement mis en oeuvre sous la forme d'une composition bicomposant.

Ainsi, l'invention concerne également une composition bicomposant comprenant :
- dans un premier compartiment, au moins un polymère hydrocarboné comprenant deux groupements terminaux dithiocyclocarbonate selon l'invention, et
- dans un deuxième compartiment, au moins un composé aminé tel que décrit précédemment.

De préférence, les polymère(s) hydrocarboné(s) à terminaisons dithiocyclocarbonate et composé(s) aminés sont utilisés en quantités telles que chacun des groupes dithiocyclocarbonate du (des) polymère(s) a réagi avec un groupe amine d'un composé aminé pour former un groupe (thio)uréthane.

Plus préférentiellement, les polymère(s) hydrocarboné(s) à terminaisons dithiocyclocarbonate sont mis à réagir avec un ou plusieurs (poly)amine(s) primaire(s) en quantités stoechiométriques, c'est-à-dire que le rapport molaire du nombre de groupes dithiocyclocarbonates sur le nombre de groupes amines primaires est environ égal à 1.

Les poly(thio)uréthanes ainsi obtenus, qui sont nouveaux, ont été avantageusement préparés sans isocyanate.

Le poly(thio)uréthane selon l'invention possède de plus des groupes SH pendant à la chaine principale du polymère, contrairement aux polyuréthanes de l'art antérieur. A ce titre, le poly(thio)uréthane selon l'invention peut être désigné de manière plus précise par le terme de polymercapto(thio)uréthane. Grâce à ses fonctions SH, le polymère selon l'invention peut réticuler sur lui-même, une fois en contact avec de l'air, ce qui est particulièrement adapté à une utilisation de celui-ci sous forme de composition bicomposant.

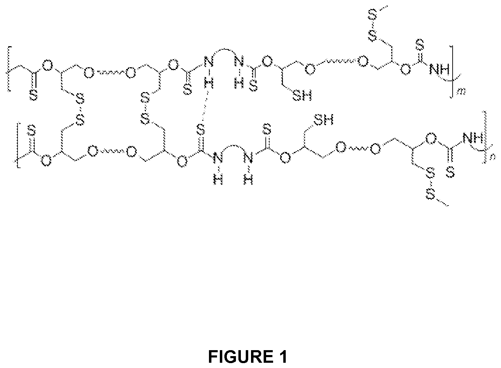

En effet, les groupes SH sont capables de réagir entre eux spontanément, en présence de dioxygène (même à l'état de traces), pour former des ponts disulfures S-S entre les chaines polymériques du poly(thio)uréthane et créer ainsi à un réseau polymérique tridimensionnel. Une représentation d'un tel réseau polymérique est donnée à titre d'exemple dans la figure 1 de la présente demande.

Les poly(thio)uréthanes selon l'invention présentent ainsi l'avantage de pouvoir être formulés (c'est-à-dire avec ajout éventuels d'additifs) sous la forme de compositions bicomposant particulièrement réactives, et de posséder, une fois réticulées, des propriétés mécaniques particulièrement intéressantes, notamment pour le domaine des adhésifs, des mastics et du revêtement de surface.

Les poly(thio)uréthanes réticulés selon l'invention présentent notamment des valeurs de cohésion supérieures à 1,5 MPa (mégapascal).

De telles valeurs de cohésion permettent une utilisation comme adhésif, par exemple dans le domaine de la construction, du transport ou de l'industrie en général.

Les propriétés mécaniques, et notamment les valeurs de cohésion, des poly(thio)uréthanes réticulés selon l'invention peuvent être mesurées conformément à la norme ISO 527-1 ou ASTM D 638-03, et notamment dans selon le protocole décrit ci-après.

Le principe de la mesure de la résistance et de l'allongement à la rupture des compositions testées par essai de traction consiste à étirer dans une machine de traction, dont la mâchoire mobile se déplace à une vitesse constante égale à 100 mm/min, une éprouvette standard constituée de la composition adhésive réticulée et à enregistrer, au moment où se produit la rupture de l'éprouvette, la contrainte de traction appliquée (en MPa) ainsi que l'allongement de l'éprouvette (en %).

L'éprouvette standard est en forme d'haltère, comme illustré dans la norme internationale ISO 37. La partie étroite de l'haltère utilisée a pour longueur 20 mm, pour largeur 4 mm et pour épaisseur 300 µm.

Pour préparer l'haltère, la composition adhésive a été chauffée à 100°C, puis extrudée sur une feuille A4 de papier siliconé en une quantité suffisante pour former sur celle-ci un film ayant une épaisseur de 300 µm. Le film est laissé durant 7 jours à 23 °C et 50% d'humidité relative pour réticulation, puis l'haltère est obtenue par simple découpe dans le film réticulé.

L'invention sera mieux comprise à la vue des exemples qui suivent.

### EXEMPLES

Les exemples qui suivent illustrent l'invention sans pour autant en limiter la portée.

### I - Exemples 1 à 5 : Synthèse d'un polymère à terminaisons dithiocyclocarbonate selon l'invention

Les polymères hydrocarbonés à terminaisons dithiocyclocarbonate des exemples 1 à 3 ont été obtenus à l'aide des étapes suivantes :
1- une étape de synthèse de(s) cyclooléfine(s) de formules (A) et/ou (B),
2- une étape de synthèse de l'agent de transfert (CTA) de formule (C1) ou (C2),
3- une étape de polymérisation par ouverture de cycle par métathèse de cyclooléfine de formule (A) et éventuellement de composé de formule (B) en présence d'un catalyseur de Grubbs et de l'agent de transfert, l'étape 1 étant de préférence facultative lorsque les cyclooléfine(s) des formules (A) et (B) sont disponibles dans le commerce.

Les réactions de polymérisation par ouverture de cycle par métathèse mises en oeuvre dans les exemples 1 à 5 sont représentées par les schémas généraux (5) et (6), utilisant respectivement un CTA monofonctionnel (C1) et un CTA difonctionnel (C2), et seront explicités au cas par cas dans les exemples. 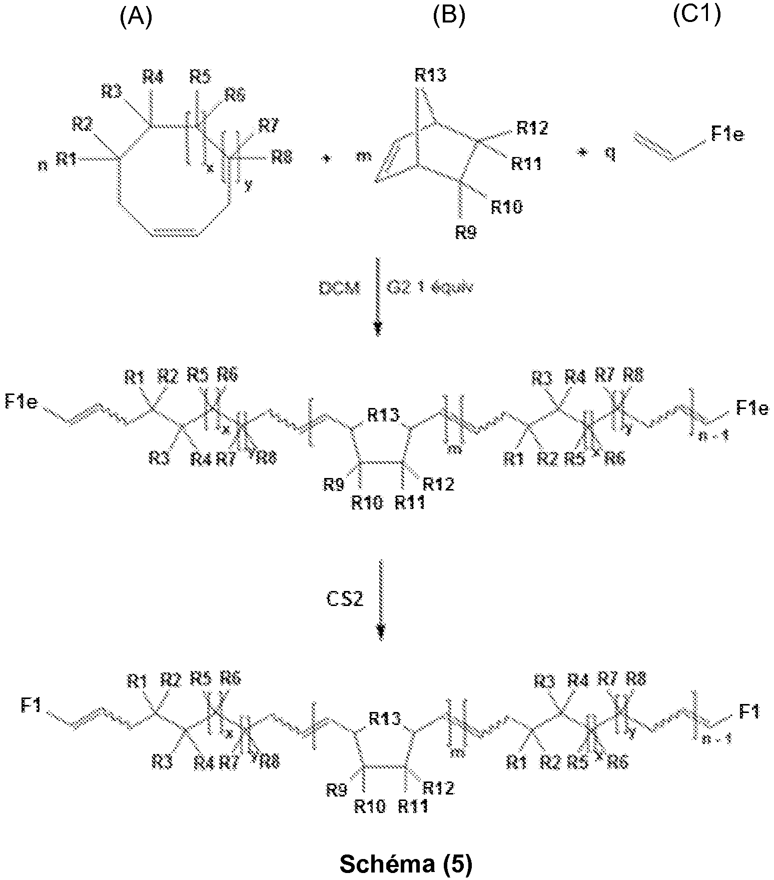 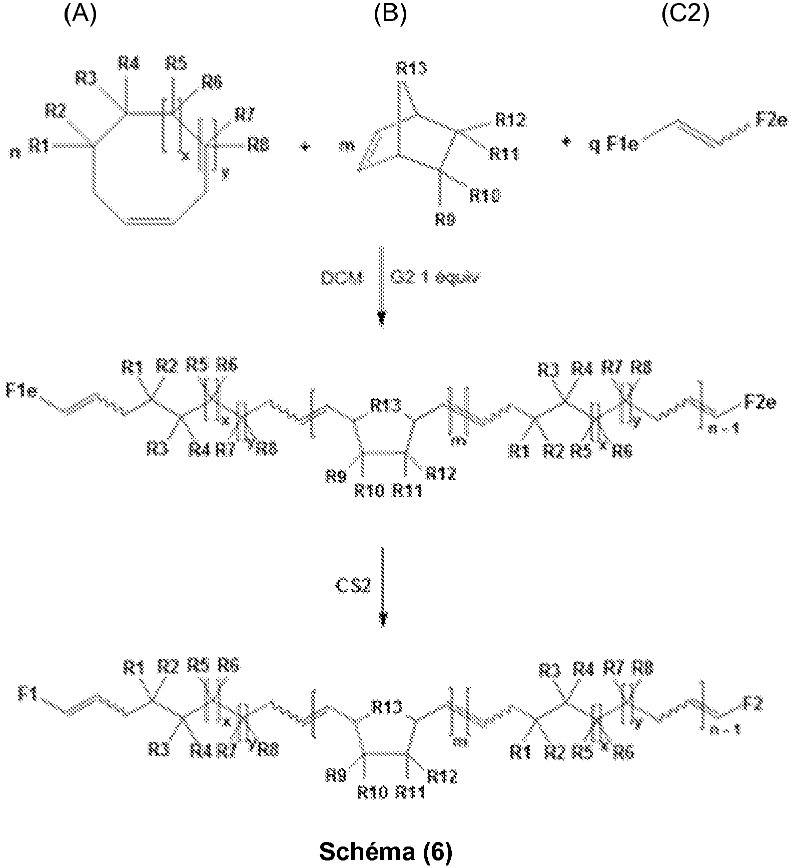 Dans ces schémas (5) et (6) :
- 1 équiv. signifie un équivalent et correspond à la quantité de catalyseur de métathèse utilisée ;
- DCM signifie dichlorométhane ;
- (A) et (B) sont les cyclooléfines répondant respectivement aux formules (A) et (B) définies précédemment ;
- (C1) et(C2) sont les agents de transfert répondant respectivement aux formules (C1) et (C2) définis précédemment ;
- la liaison 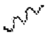 est une liaison simple carbone-carbone orientée géométriquement d'un côté ou de l'autre par rapport à la double liaison (cis ou trans) pour (C2) ;
- G2 est le catalyseur de métathèse de formule (G2) telle que définie précédemment ;
- F1 et F2 sont identiques et correspondent tous deux soit au groupe de type dithiocyclocarbonate-ester ci-dessous : 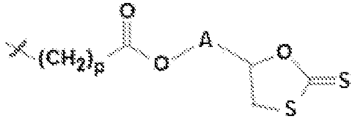 soit au groupe de type dithiocyclocarbonate-ester ci-dessous : 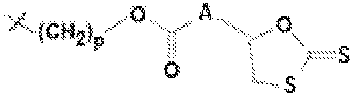 dans lequel : p = p1 ou p2 et A sont tels que définis précédemment ;
- F1e et F2e sont identiques et correspondent respectivement à F1 et F2, à savoir qu'ils correspondent tous deux soit au groupe de type époxy-ester ci-dessous : 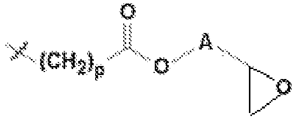 soit au groupe de type époxy-ester ci-dessous : 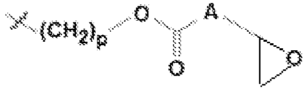 dans lequel: p = p1 ou p2 et A sont tels que définis précédemment ;
- n est le nombre de moles de cyclooléfine(s) de formule (A) ;
- m est le nombre de moles de cyclooléfine(s) de formule (B) ;
- q est le nombre de moles de CTA de formule (C1), ou (C2). Le nombre d'unités monomères dans le polymère obtenu à l'issue de la réaction de polymérisation est égal à n + m.

Dans chacun des exemples 1 à 9 décrits ci-après, la réaction de ROMP dure 24 h à une température de 40 °C.

Toutes les polymérisations ont été effectuées de façon similaire. Les seules différences résident dans la nature et la concentration initiale du (ou des) agent(s) de transfert de chaîne (CTA) de type (C1) ou (C2) utilisé(s).

Les CTA utilisés dans les exemples 1 à 9 sont les suivants:
- l'acrylate de glycidyle (noté CTA¹) 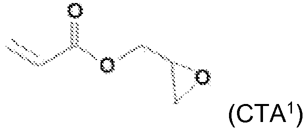 (qui correspond à un CTA de formule (C1) où : p1 = 0, A est un groupe méthylène -CH₂-) ;
- le fumarate de diglycidyle (noté CTA²) 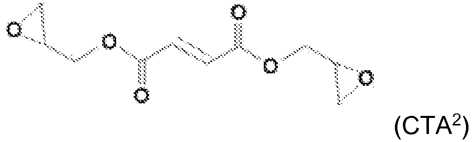 (qui correspond à un CTA de formule (C2) où : p1 = p2 = 0, A est un groupe méthylène -CH₂-) ; et
   Deux possibilités de réaction (i et ii) existent, selon que l'on utilise la cyclooléfine de formule (A) seule (exemples 1 à 3) ou selon que l'on utilise les cyclooléfines de formules (A) et (B) en mélange (exemples 4 et 5).

### i) - Exemples 1 à 3 : Polymérisation des cvclooléfines de formule (A)

Les cyclooléfines de formule (A) utilisées dans les exemples 1 à 5 sont les suivantes :

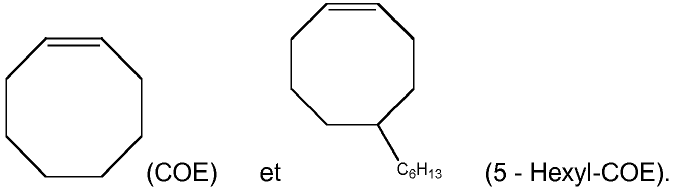

Le cyclooctène (COE) est un produit commercial de la société Sigma Aldrich.

Le 5-*n*-hexyl-cyclooctène (5-Hexyl-COE) peut être synthétisé à partir du 5,6-époxycyclooctène (5-Epoxy-COE) selon la voie indiquée dans le schéma réactionnel (7) ci-dessous, avec les rendements suivants indiqués entre parenthèses :

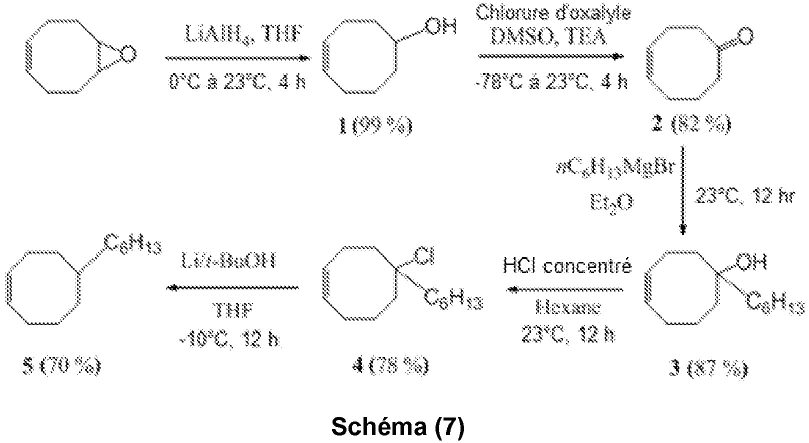

Le 5-oxocyclooctène (5-O=COE, référencé **2** dans le schéma (5) ci-dessus) a été synthétisé selon la procédure indiquée dans la publication de A.Diallo et al., Polymer Chemistry, Vol. 5, Issue 7, 7 April 2014, pages 2583-2591 (qui se référait à Hillmyer et al, Macromolecules, 1995, 28, pages 6311-6316).

Le 5-hexyl-cyclooctène (5-Hexyl-COE référencé 5 dans le schéma (5) ci-dessus) a été synthétisé selon la procédure indiquée dans la publication de A.Diallo et al., Polymer Chemistry, précitée (qui se référait à Kobayashi et al., J. Am. Chem. Soc. 2011, 133, pages 5794-5797).

Les matières premières, réactifs et solvants utilisés pour la synthèse de ces cyclooléfines de formule (A) sont disponibles commercialement auprès de la société Sigma Aldrich.

Dans les exemples qui suivent :
Les spectres RMN ont été enregistrés sous spectromètres AM-500 Bruker et AM-400 Brüker, à 25 °C dans CDCl₃. Les déplacements chimiques étaient référencés par rapport au tétraméthylsilane (TMS) en utilisant la résonance (¹H) ou (¹³C) des solvants deutériés.

Les masses molaires moyennes en nombre et en poids (Mₙ and M_{w}) et la polydispersité PDI (M_{w}/Mₙ) des polymères ont été déterminés par chromatographie d'exclusion stérique (SEC) dans le THF, avec étalonnage PS en utilisant un instrument Polymer Laboratories PL-GPC 50.

Les réactions ont été réalisées, par pure précaution, en conditions anhydres (gaz inerte, solvant sec).

### Exemple 1 : Synthèse d'un polymère comprenant deux groupements terminaux [2-thione-1,3-oxathiolan-4-yl]méthyle ester à partir de cyclooctène (COE) et d'acrylate de glycidyle (CTA¹)

La réaction a été mise en oeuvre selon le schéma (8) suivant, dans un rapport molaire m/n égal à 0/100 et selon le mode opératoire décrit ci-après :

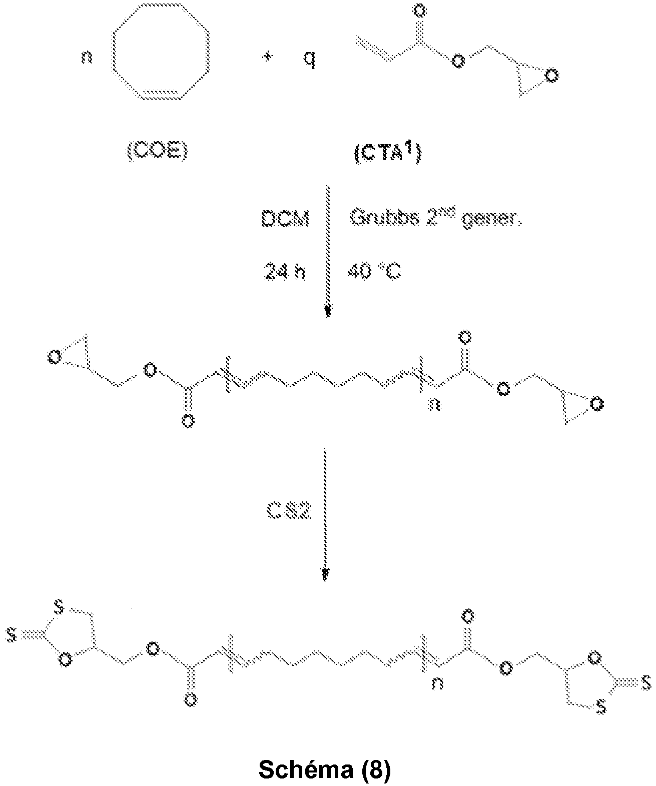

### Mode opératoire :

On a mélangé dans un ballon de 1000 mL, la cyclooléfine de formule (A) (*108,00 mmol*), de l'hydroquinone (*0,54 mmole*) et du CH₂Cl₂ sec (50 mL). Le ballon et son contenu ont ensuite été mis sous argon. Le CTA (*10,80 mmol*) de type (C1) a été introduit dans le ballon par seringue. Le ballon a alors été immergé dans un bain d'huile à 40 °C puis on a procédé immédiatement à l'ajout, par une canule, du catalyseur G2 (*54,00 µmol*) en solution dans du CH₂Cl₂ (20 mL). 24 h après l'addition du catalyseur, la solution est concentrée en évaporant partiellement le CH₂Cl₂ (jusqu'à la limite de solubilité du polymère). Le produit est récupéré après précipitation dans le méthanol (15 mL), filtration et séchage à 20 °C sous vide.

Le produit isolé ci-dessus (*0.05 mmol*), le bromure de lithium (*0.05 mmol*) et du THF sec (10 mL) ont été placés dans un ballon de 50 mL dans lequel a également été placé un barreau magnétique d'agitation revêtu de Téflon®. Le ballon et son contenu ont ensuite été mis sous argon. Le sulfure de carbone (*0.10 mmol*) a alors été introduit dans le ballon goutte à goutte par seringue. Le ballon a alors été immergé dans un bain d'huile à 40 °C pendant 17 h. Un produit a été récupéré après précipitation dans le méthanol (20 mL), filtration et séchage à 23 °C sous vide.

### Résultats :

Le polymère obtenu est solide à température ambiante.

Le taux de conversion de la cyclooléfine de formule (A) déterminé par RMN (exprimé en %), la masse molaire moyenne en nombre du polymère obtenu (exprimé en gramme par mole) ainsi que la polymolécularité (PDI) dudit polymère, déterminés par SEC, ont donné les résultats suivants :

**Tableau 1 :**

| **Essai n°** | **[A]/[CTA¹]/[Ru] (mol/mol)** | **Conversion A (%)** | **Mn_{SEC} (g/mol)** | **PDI** |
|---|---|---|---|---|
| **1** | 2 000/200/1 | 100 | 4 600 | 1,53 |

Les analyses RMN ¹H (CDCl₃, 500 MHz, 25 °C) et ¹³C (CDCl₃, 125 MHz, 25 °C) du polymère obtenu pour cet essai ont confirmé la structure du polymère attendu telle que représentée sur le schéma (8).

### Exemple 2 : Synthèse du polymère de l'exemple 1 à partir de cyclooctène (COE) et de fumarate de diglycidyle (CTA²)

La réaction a été mise en oeuvre selon le schéma (9) suivant, dans un rapport molaire m/n égal à 0/100 et selon le mode opératoire décrit ci-après :

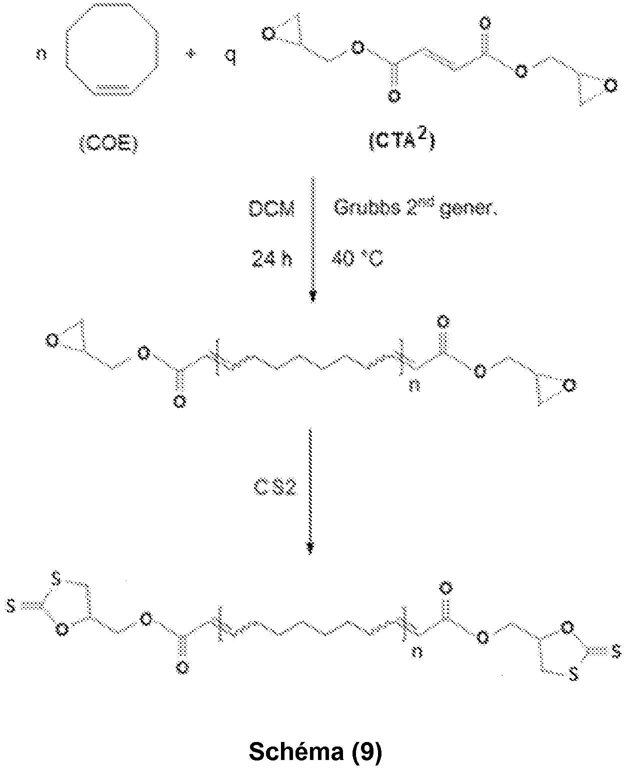

### Mode opératoire :

On mélange dans un ballon de 1000 mL, la cyclooléfine de formule (A) (*108,00 mmol*), et du CH₂Cl₂ sec (50 mL). Le ballon et son contenu ont ensuite été mis sous argon. Le CTA (*5,40 mmol*) de type (C2) a été introduit dans le ballon par seringue. Le ballon a alors été immergé dans un bain d'huile à 40 °C puis l'on a procédé immédiatement à l'ajout, par une canule, du catalyseur G2 (*54,00 µmol*) en solution dans du CH₂Cl₂ (20 mL). 24 h après l'addition du catalyseur, la solution est concentrée en évaporant partiellement le CH₂Cl₂ (jusqu'à la limite de solubilité du polymère). Le produit est récupéré après précipitation dans le méthanol (15 mL), filtration et séchage à 20 °C sous vide.
Le produit isolé ci-dessus (*0.05 mmol*), le bromure de lithium (*0.05 mmol*) et du THF sec (10 mL) ont été placés dans un ballon de 50 mL dans lequel a également été placé un barreau magnétique d'agitation revêtu de Téflon®. Le ballon et son contenu ont ensuite été mis sous argon. Le sulfure de carbone (*0.10 mmol*) a alors été introduit dans le ballon goutte à goutte par seringue. Le ballon a alors été immergé dans un bain d'huile à 40 °C pendant 17 h. Un produit a été récupéré après précipitation dans le méthanol (20 mL), filtration et séchage à 23 °C sous vide.

### Résultats :

Le polymère obtenu est solide à température ambiante.

Le taux de conversion de la cyclooléfine de formule (A) déterminé par RMN (exprimé en %), la masse molaire moyenne en nombre du polymère obtenu (exprimé en gramme par mole) ainsi que la polymolécularité (PDI) dudit polymère, déterminés par SEC, ont donné les résultats suivants :

**Tableau 2 :**

| **Essai n°** | **[A]/[CTA²]/[Ru] (mol/mol)** | **Conversion A (%)** | **Mn_{SEC} (g/mol)** | **PDI** |
|---|---|---|---|---|
| **2** | 2 000/100/1 | 100 | 5 100 | 1,53 |

Les analyses RMN ¹H (CDCl₃, 500 MHz, 25 °C) et ¹³C (CDCl₃, 125 MHz, 25 °C) du polymère obtenu pour cet essai ont confirmé la structure du polymère attendu telle que représentée sur le schéma (9).

### Exemple 3 : Synthèse d'un polymère comprenant deux groupements terminaux [2-thione-1,3-oxathiolan-4-yl]méthyle ester à partir de 5-hexyl-cyclooctène (5-Hexyl-COE) et de fumarate de diglycidyle (CTA²)

La réaction a été mise en oeuvre selon le schéma (10) suivant, dans un rapport molaire m/n égal à 0/100 et selon le même mode opératoire que l'exemple 2 :

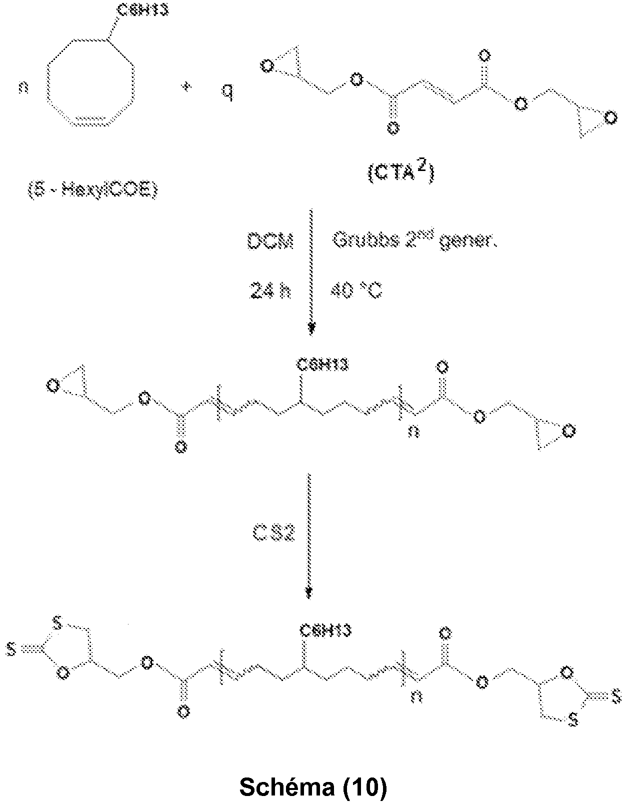

### Résultats :

Le polymère obtenu est liquide à température ambiante.

Le taux de conversion de la cyclooléfine de formule (A) déterminé par RMN (exprimé en %), la masse molaire moyenne en nombre du polymère obtenu (exprimé en gramme par mol) ainsi que la polymolécularité (PDI) dudit polymère, déterminés par SEC, ont donné les résultats suivants :

**Tableau 3 :**

| **Essai n°** | **[A]/[CTA²]/[Ru] (mol/mol)** | **Conversion A (%)** | **Mn_{SEC} (g/mol)** | **PDI** |
|---|---|---|---|---|
| **3** | 2 000/100/1 | 100 | 5 300 | 1,52 |

Les analyses RMN ¹H (CDCl₃, 500 MHz, 25 °C) et ¹³C (CDCl₃, 125 MHz, 25 °C) du polymère obtenu pour cet essai ont confirmé la structure du polymère attendu telle que représentée sur le schéma (10).

### ii) - Exemple 4 à 5 : Polymérisation d'un mélange de cyclooléfines de formules (A) et (B) :

Les cyclooléfines de formule (A) et (B) utilisées dans les exemples 4 et 5 sont respectivement les suivantes :

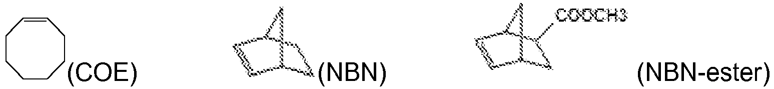

Le cyclooctène (COE) de pureté supérieure à 95 %, le norbornène (NBN) et le 5-norbornène-2-carboxylate de méthyle (NBN-ester) de pureté supérieure à 99 % sont disponibles commercialement auprès de la société Sigma Aldrich. Ces produits ont été au préalable distillés sur CaH₂, avant d'être utilisés dans les exemples 4 et 5.

### Exemple 4: Synthèse d'un polymère comprenant deux groupements terminaux [2-thione-1,3-oxathiolan-4-yl]méthyle ester à partir de cyclooctène (COE), de norbornène (NBN) et de fumarate de diglycidyle (CTA²)

La réaction a été mise en oeuvre selon le schéma (11) suivant, dans un rapport molaire m/n égal à 50/50 et selon le mode opératoire décrit ci-après :

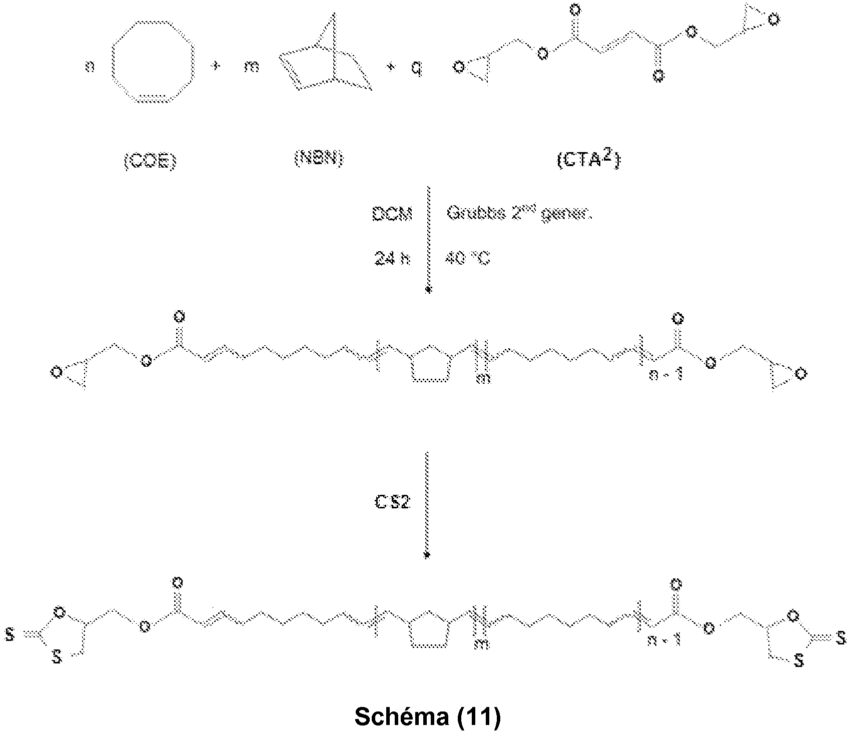

### Mode opératoire :

Dans un ballon de 1000 mL, on a mélangé les cyclooléfines de formules (A) et (B), correspondant à COE (*54,00 mmol*) et NBN (*54,00 mmol*) respectivement, et du CH₂Cl₂ sec (50 mL). Le ballon et son contenu ont ensuite été mis sous argon. Le CTA (*5,40 mmol*) de type (C2) a alors été introduit dans le ballon par seringue. Le ballon a alors été immergé dans un bain d'huile à 40 °C puis on a procédé immédiatement à l'ajout, par une canule, du catalyseur G2 (*54 µmol*) en solution dans du CH₂Cl₂ (20 mL). 24 h après l'addition du catalyseur, la solution est concentrée en évaporant partiellement le CH₂Cl₂ (jusqu'à la limite de solubilité du polymère). Le produit est récupéré après précipitation dans le méthanol (15 mL), filtration et séchage à 20 °C sous vide.

Le produit isolé ci-dessus (*0.05 mmol*), le bromure de lithium (*0.05 mmol*) et du THF sec (10 mL) ont été placés dans un ballon de 50 mL dans lequel a également été placé un barreau magnétique d'agitation revêtu de Téflon®. Le ballon et son contenu ont ensuite été mis sous argon. Le sulfure de carbone (*0.10 mmol*) a alors été introduit dans le ballon goutte à goutte par seringue. Le ballon a alors été immergé dans un bain d'huile à 40 °C pendant 17 h. Un produit a été récupéré après précipitation dans le méthanol (20 mL), filtration et séchage à 23 °C sous vide.

### Résultats :

Le polymère obtenu est liquide à température ambiante.

Les taux de conversion des cyclooléfines de formule (A) et (B) déterminés par RMN (exprimé en %), la masse molaire moyenne en nombre du polymère obtenu (exprimé en gramme par mol) ainsi que la polymolécularité (PDI) du polymère déterminés par SEC. Les résultats ont été consignés dans le tableau 4 suivant :

**Tableau 4 :**

| **Essai n°** | **[A]/[B]/[CTA¹]/[Ru] (mol/mol)** | **Conversion (%)** | **Mn_{SEC} (g/mol)** | **PDI** |
|---|---|---|---|---|
| **8** | 1 000/1 000/100/1 | 100 | 5 000 | 1,60 |

Les analyses RMN ¹H (CDCl₃, 500 MHz, 25 °C) et ¹³C (CDCl₃, 125 MHz, 25 °C) du polymère obtenu ont confirmé la structure du polymère attendu telle que représentée sur le schéma (11).

### Exemple 5: Synthèse d'un polymère comprenant deux groupements terminaux [2-thione-1,3-oxathiolan-4-yl]méthyle ester à partir de cyclooctène (COE), de 5-norbornène-2-carboxylate de méthyle (NBN-ester et de fumarate de diglycidyle (CTA²)

La réaction a été mise en oeuvre selon le schéma (12) suivant, dans un rapport molaire m/n égal à 50/50 et selon le même mode opératoire que l'exemple 4 :

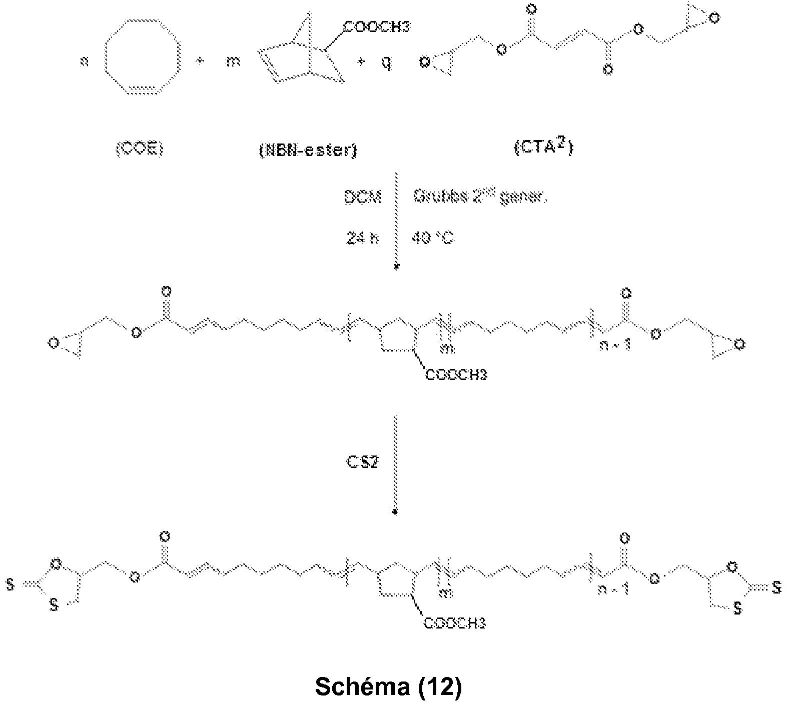

### Résultats :

Le polymère obtenu est liquide à température ambiante.

Les taux de conversion des cyclooléfines de formule (A) et (B) déterminés par RMN (exprimé en %), la masse molaire moyenne en nombre du polymère obtenu (exprimé en gramme par mol) ainsi que la polymolécularité (PDI) du polymère déterminés par SEC. Les résultats ont été consignés dans le tableau 5 suivant :

**Tableau 5 :**

| **Essai n°** | **[A]/[B]/[CTA³]/[Ru] (mol/mol)** | **Conversion (%)** | **Mn_{SEC} (g/mol)** | **PDI** |
|---|---|---|---|---|
| **5** | 1 000/1 000/100/1 | 100 | 5 300 | 1,58 |

Les analyses RMN ¹H (CDCl₃, 500 MHz, 25 °C) et ¹³C (CDCl₃, 125 MHz, 25 °C) du polymère obtenu ont confirmé la structure du polymère attendu telle que représentée sur le schéma (12).

### Il - Exemple comparatif 6 : Synthèse d'un polymère comprenant deux groupements terminaux méthylène cyclocarbonate à partir de cyclooctène (COE) et de fumarate de bis[(2-oxo-1,3-dioxolan-4-yl)méthyl] (CTA⁵)

La réaction a été mise en oeuvre selon le schéma (13) suivant, dans un rapport molaire m/n égal à 0/100 et selon le même mode opératoire de polymérisation par ouverture de cycle par métathèse que l'exemple 2 :

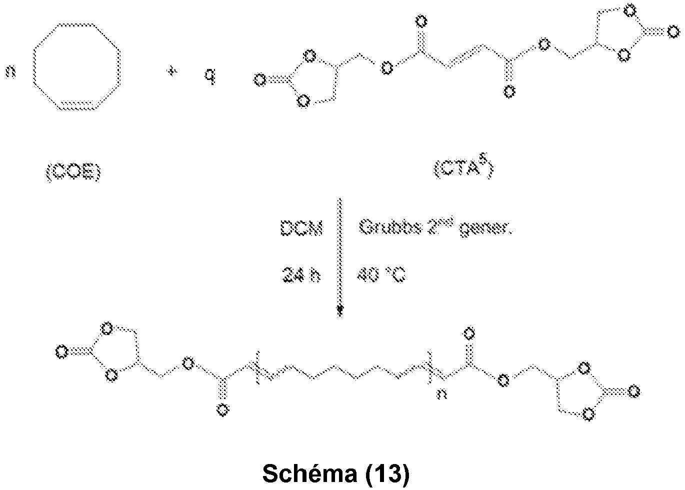

### Résultats :

Le polymère obtenu est solide à température ambiante.

Les résultats du taux de conversion de la cyclooléfine de formule (A) déterminé par RMN (exprimé en %), de la masse molaire moyenne en nombre du polymère obtenu (exprimé en gramme par mol) ainsi que de la polymolécularité (PDI) dudit polymère, déterminés par SEC, ont été consignés dans le tableau 6 suivant :

**Tableau 6 :**

| **Essai n°** | **[A]/[B]/[CTA¹]/[Ru] (mol/mol)** | **Conversion (%)** | **Mn_{SEC} (g/mol)** | **PDI** |
|---|---|---|---|---|
| **8** | 1 000/1 000/100/1 | 100 | 5 000 | 1,60 |

Les analyses RMN ¹H (CDCl₃, 500 MHz, 25 °C) et ¹³C (CDCl₃, 125 MHz, 25 °C) du polymère obtenu pour cet essai ont confirmé la structure du polymère attendu telle que représentée sur le schéma (13).

### III - Exemple 7 à 9 : Synthèses de poly(thio)uréthanes à partir des polyoléfines insaturées des exemples 2, 5 et 6 :

### Exemple comparatif 7 : Synthèse d'un polyuréthane à partir de la polyoléfine insaturée solide de l'exemple comparatif 6

Il a été mis en réaction à 80 °C, séparément et dans un rapport stoechiométrique, la polyoléfine de l'exemple comparatif 6 avec une diamine primaire de type polyéther diamine (JEFFAMINE EDR 148, Huntsman) et ce, jusqu'à disparition complète de la bande infrarouge caractéristique des groupements 1,3-dioxolan-2-one (à 1800 cm⁻¹) et apparition des bandes caractéristiques de la liaison carbamate (bande à 1700 cm⁻¹).

La durée de la réaction relevée lors de la disparition complète de la bande infrarouge caractéristique des groupements 1,3-dioxolan-2-one, était d'environ 12 h à 80 °C.

### Exemple 8 : Synthèse d'un poly(thio)uréthane à partir de la polyoléfine insaturée solide de l'exemple 2 selon l'invention

L'exemple 7 a été reproduit en remplaçant la polyoléfine de l'exemple 6 par la polyoléfine solide de l'exemple 2 et ce, jusqu'à disparition complète de la bande infrarouge caractéristique des groupements 2-thione-1,3-oxathiolan-4-yle (bande C=S à 1200 cm⁻¹ en Infra-Rouge), apparition des bandes caractéristiques de la liaison thiocarbamate (bande C=S à 1530 cm⁻¹ en Infra-Rouge) et l'apparition des bandes caractéristiques des fonctions thiols et disulfures (bande SH à 2500 cm⁻¹ et bande S-S à 510 cm⁻¹ en Raman).

La durée de la réaction relevée lors de la disparation complète de la bande infrarouge caractéristique des groupements 1,3-dioxolan-2-one, était inférieure à 3 h à 80 °C.

### Exemple 9 : Synthèse d'un polyuréthane à partir de la polyoléfine insaturée liquide de l'exemple 5 selon l'invention

L'exemple 7 a été reproduit en remplaçant la polyoléfine de l'exemple 2 par la polyoléfine de l'exemple 5 et en réalisant la réaction à température ambiante (23 °C) et ce, jusqu'à disparition complète de la bande infrarouge caractéristique des groupements 2-thione-1,3-oxathiolan-4-yle (bande C=S à 1200 cm⁻¹ en Infra-Rouge), apparition des bandes caractéristiques de la liaison thiocarbamate (bande C=S à 1530 cm⁻¹ en Infra-Rouge) et l'apparition des bandes caractéristiques des fonctions thiols et disulfures (bande SH à 2500 cm⁻¹ et bande S-S à 510 cm⁻¹ en Raman).

La durée de la réaction relevée lors de la disparation complète de la bande infrarouge caractéristique des groupements 1,3-dioxolan-2-one, était inférieure à 3 h à 23°C.

Dans chaque cas, les produits des exemples 8 et 9 ont pu être formulés sous la forme d'un mélange bi-composant présentant des propriétés adhésives satisfaisantes.

## Revendications

1. Polymère hydrocarboné comprenant deux groupements terminaux dithiocyclocarbonate, ledit polymère hydrocarboné étant de formule (1) suivante 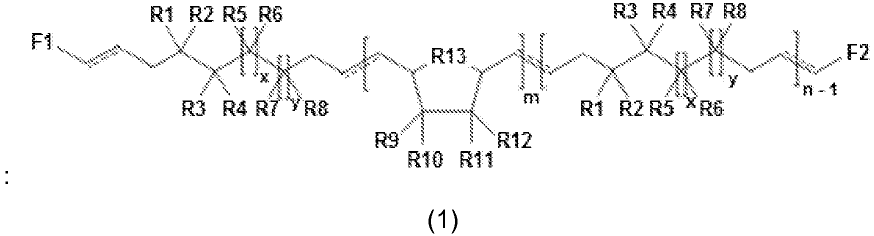 dans laquelle :
• chaque liaison carbone-carbone de la chaîne notée 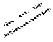 est une double liaison ou une simple liaison ;
• les groupes R1, R2, R3, R4, R5, R6, R7 et R8, identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
• au moins un des groupes R1 à R8 pouvant faire partie d'un même cycle hydrocarboné ou hétérocycle, saturé ou insaturé, avec au moins un autre des groupes R1 à R8 ;
• au moins une des paires (R1,R2), (R3,R4), (R5,R6) et (R7,R8) pouvant être un groupe oxo ;
• x et y, identiques ou différents, sont des nombres entiers allant de 0 à 5;
• les groupes R9, R10, R11 et R12 identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
• au moins un des groupes R9 à R12 pouvant faire partie d'un même cycle hydrocarboné ou hétérocycle, saturé ou insaturé, avec au moins un autre des groupes R9 à R12 ;
• le groupe R13 est CH₂, O, S, C(=O) ou NR₀, R₀ étant un groupe alkyle comportant de 1 à 22 atomes de carbone ; et
• n est un nombre entier supérieur ou égal à 2 et m est un nombre entier supérieur ou égal à 0, le rapport molaire m/n allant de 0/100 à 90/10 ; n et m étant tels que la masse molaire moyenne en nombre Mn du polymère hydrocarboné de formule (1) va de 500 à 50 000 g/mol, et la polymolécularité (PDI) du polymère hydrocarboné de formule (1) va de 1,0 à 3,0 ;
• F1 est représenté par la formule suivante : 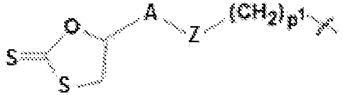
• et F2 est représenté par la formule suivante : 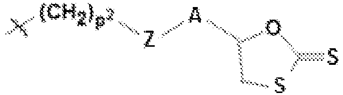 dans lesquelles :
A est un groupe alkylène en C1 à C9 ;
Z est tel que le groupe divalent -A-Z- est le groupe -A-C(=O)O- ou -A-OC(=O)- et de préférence -A-OC(=O)- ;
p1 et p2, identiques ou différents, représentent chacun un nombre entier égal à 0, 1, 2 ou 3.

2. Polymère hydrocarboné comprenant deux groupements terminaux dithiocyclocarbonate selon la revendication 1, **caractérisé en ce qu'**il possède une masse molaire moyenne en nombre Mn allant de 600 à 45000 g/mol.

3. Polymère hydrocarboné comprenant deux groupements terminaux dithiocyclocarbonate selon la revendication 1 ou 2, **caractérisé en ce que** Z est tel que le groupe divalent -A-Z- est le groupe -A-OC(=O)-, et/ou p1 = p2 = 0, et/ou A est le groupe méthylène, et/ou les groupes R1 à R8 sont chacun un atome d'hydrogène.

4. Polymère hydrocarboné comprenant deux groupements terminaux dithiocyclocarbonate selon l'une quelconque des revendications 1 à 3, **caractérisé en ce que** x=y=1.

5. Polymère hydrocarboné comprenant deux groupements terminaux dithiocyclocarbonate selon l'une quelconque des revendications 1 à 4, **caractérisé en ce que** sa chaine principale est saturée.

6. Procédé de préparation d'au moins un polymère hydrocarboné comprenant deux groupements terminaux dithiocyclocarbonate, **caractérisé en ce qu'**il comprend :
I) une étape de polymérisation par ouverture de cycle par métathèse, en présence :
- d'au moins un catalyseur de métathèse,
- d'au moins un agent de transfert de chaîne mono ou di-époxydé de formule (C1) ou (C2) suivante : 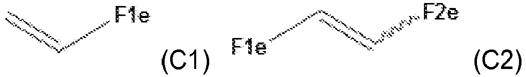 dans lesquelles :
• F1e est représenté par la formule suivante : 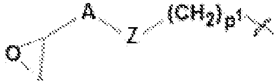
• et F2e est représenté par la formule suivante : 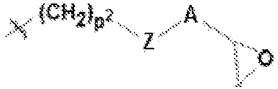
• A, Z, p1 et p2 des formules F1e et F2e sont tels que définis dans l'une quelconque des revendications précédentes,
• la liaison 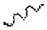 est une liaison simple carbone-carbone orientée géométriquement d'un côté ou de l'autre par rapport à la double liaison (cis ou trans) dans la formule (C2) ;
- d'au moins un composé de formule (A) suivante : 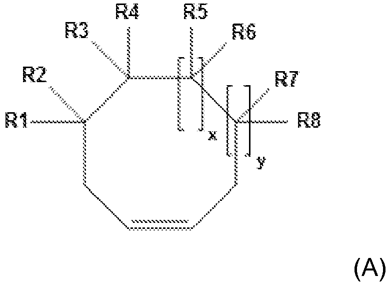 dans laquelle :
• les groupes R1, R2, R3, R4, R5, R6, R7 et R8, identiques ou différents, sont choisis parmi un atome d'hydrogène, un atome d'halogène, un groupe alkyle, un groupe hétéroalkyle, un groupe alcoxycarbonyle ou un groupe hétéroalcoxycarbonyle,
• au moins un des groupes R1 à R8 pouvant faire partie d'un même cycle hydrocarboné ou hétérocycle, saturé ou insaturé, avec au moins un autre des groupes R1 à R8, et
• au moins une des paires (R1,R2), (R3,R4), (R5,R6) et (R7,R8) pouvant être un groupe oxo ;
• x et y sont tels que définis dans l'une quelconque des revendications précédentes;
et
- d'éventuellement au moins un composé de formule (B) : 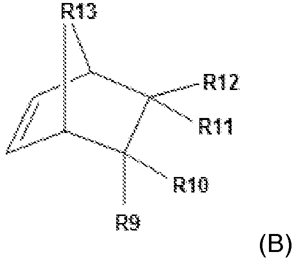 dans laquelle :
• les groupes R9, R10, R11 et R12, identiques ou différents, sont choisis parmi un atome d'hydrogène, un atome d'halogène, un groupe hétéroalkyle, un groupe alcoxycarbonyle et un groupe hétéroalcoxycarbonyle,
• au moins un des groupes R9 à R12 pouvant faire partie d'un même cycle ou hétérocycle saturé ou insaturé avec au moins un autre des groupes R9 à R12 ; et
• le groupe R13 est CH₂, O, S, C(=O) ou NR₀, R₀ étant un groupe alkyle comportant de 1 à 22 atomes de carbone ;
pendant une durée de réaction allant de 2 à 24 h et à une température allant de 20 à 60 °C ; puis
optionnellement une étape d'hydrogénation sélective des doubles liaisons du polymère issu de l'étape I) possédant deux groupements époxy terminaux ; puis
II) une étape de dithiocarbonation du produit obtenu à l'étape précédente par réaction avec du disulfure de carbone (CS₂) en présence d'un composé halogéné du lithium, à une température allant de 20 à 60 °C.

7. Procédé de préparation selon la revendication 6, ledit procédé étant tel que :
- le rapport molaire du CTA de formule (C1) sur le composé de formule (A), ou sur la somme des composés de formules (A) et (B) si le composé de formule (B) est présent, va de 1.10⁻³ à 1,0 ou
- le rapport molaire du CTA de formule (C2) sur le composé de formule (A), ou sur la somme des composés de formules (A) et (B) si le composé de formule (B) est présent, va de 0,5.10⁻³ à 0,5.

8. Composition bicomposant comprenant :
- dans un premier compartiment, au moins un polymère hydrocarboné comprenant deux groupements terminaux dithiocyclocarbonate selon l'une quelconque des revendications 1 à 5 ou tel qu'obtenu par le procédé de préparation de la revendication 6, et
- dans un deuxième compartiment, au moins un composé comprenant au moins un groupement amine.

## Patentansprüche

1. Kohlenwasserstoffpolymer, umfassend zwei terminale Dithiocyclocarbonatgruppen, wobei das Kohlenwasserstoffpolymer die folgende Formel (1): 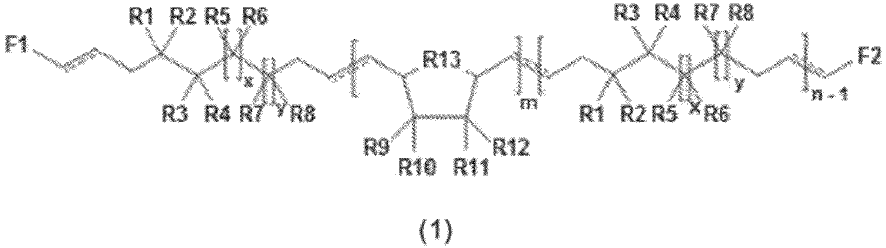 aufweist, wobei:
• jede Kohlenstoff-Kohlenstoff-Bindung der als 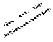 bezeichneten Kette eine Doppelbindung oder eine Einfachbindung ist;
• die Gruppen R1, R2, R3, R4, R5, R6, R7 und R8, die identisch oder verschieden sind, aus einem Wasserstoffatom, einem Halogenatom, einer Alkylgruppe, einer Heteroalkylgruppe, einer Alkoxycarbonylgruppe oder einer Heteroalkoxycarbonylgruppe ausgewählt sind,
• mindestens eine der Gruppen R1 bis R8 mit mindestens einer anderen der Gruppen R1 bis R8 einen Teil desselben gesättigten oder ungesättigten Kohlenwasserstoffcyclus oder Heterocyclus bilden kann;
• mindestens eines der Paare (R1,R2), (R3,R4), (R5,R6) und (R7,R8) eine Oxogruppe sein kann;
• x und y, die gleich oder verschieden sind, ganze Zahlen von 0 bis 5 sind;
• die Gruppen R9, R10, R11 und R12, die gleich oder verschieden sind, aus einem Wasserstoffatom, einem Halogenatom, einer Alkylgruppe, einer Heteroalkylgruppe, einer Alkoxycarbonylgruppe oder einer Heteroalkoxycarbonylgruppe ausgewählt sind,
• mindestens eine der Gruppen R9 bis R12 mit mindestens einer anderen der Gruppen R9 bis R12 einen Teil desselben gesättigten oder ungesättigten Kohlenwasserstoffcyclus oder Heterocyclus bilden kann;
• die Gruppe R13 CH₂, O, S, C(=O) oder NR₀ ist, wobei R₀ eine Alkylgruppe mit 1 bis 22 Kohlenstoffatomen ist; und
• n eine ganze Zahl größer oder gleich 2 ist und m eine ganze Zahl größer oder gleich 0 ist, das Stoffmengenverhältnis m/n 0/100 bis 90/10 beträgt; n und m derart sind, dass das Zahlenmittel Mn der Molmasse des Kohlenwasserstoffpolymers der Formel (1) von 500 bis 50 000 g/mol beträgt und die Polymolekularität (PDI) des Kohlenwasserstoffpolymers der Formel (1) von 1,0 bis 3,0 beträgt;
• F1 durch die folgende Formel veranschaulicht ist: 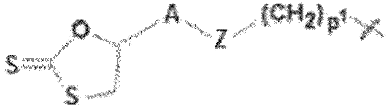
• und F2 durch die folgende Formel veranschaulicht ist: 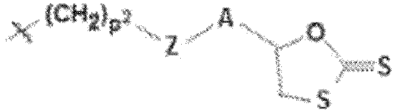 wobei:
A eine C1- bis C9-Alkylengruppe ist;
Z derart ist, dass die zweiwertige Gruppe -A-Z- die Gruppe -A-C(=O)O- oder -A-OC(=O)- und vorzugsweise -A-OC(=O)- ist;
p1 und p2, die gleich oder verschieden sind, jeweils eine ganze Zahl gleich 0, 1, 2 oder 3 darstellen.

2. Zwei terminale Dithiocyclocarbonatgruppen umfassendes Kohlenwasserstoffpolymer nach Anspruch 1, **dadurch gekennzeichnet, dass** es ein Zahlenmittel Mn der Molmasse von 600 bis 45 000 g/mol aufweist.

3. Zwei terminale Dithiocyclocarbonatgruppen umfassendes Kohlenwasserstoffpolymer nach Anspruch 1 oder 2, **dadurch gekennzeichnet, dass** Z derart ist, dass die zweiwertige Gruppe -A-Z-die Gruppe -A-OC(=O)- ist und/oder p1 = p2 = 0, und/oder A die Methylengruppe ist und/oder die Gruppen R1 bis R8 jeweils ein Wasserstoffatom sind.

4. Zwei terminale Dithiocyclocarbonatgruppen umfassendes Kohlenwasserstoffpolymer nach einem der Ansprüche 1 bis 3, **dadurch gekennzeichnet, dass** x=y=1.

5. Zwei terminale Dithiocyclocarbonatgruppen umfassendes Kohlenwasserstoffpolymer nach einem der Ansprüche 1 bis 4, **dadurch gekennzeichnet, dass** seine Hauptkette gesättigt ist.

6. Verfahren zur Herstellung von mindestens einem Kohlenwasserstoffpolymer, das zwei terminale Dithiocyclocarbonatgruppen umfasst, **dadurch gekennzeichnet, dass** es Folgendes umfasst:
I) einen Polymerisationsschritt durch Öffnen des Cyclus durch Metathese in Gegenwart:
- mindestens eines Metathesekatalysators,
- mindestens eines Mono- oder Diepoxid-Kettenübertragungsmittels der folgenden Formel (C1) oder (C2) : 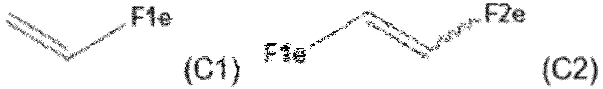 wobei:
• F1e durch die folgende Formel veranschaulicht ist: 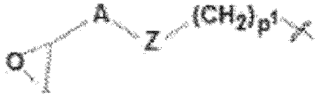
• und F2e durch die folgende Formel veranschaulicht ist: 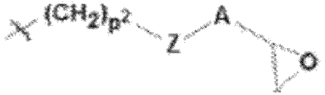
• A, Z, p1 und p2 der Formeln F1e und F2e wie in einem der vorhergehenden Ansprüche definiert sind,
• die Bindung 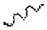 eine Kohlenstoff-Kohlenstoff-Einfachbindung ist, die in Bezug auf die Doppelbindung in der Formel (C2) auf der einen oder der anderen Seite geometrisch orientiert ist (cis oder trans);
- mindestens einer Verbindung der folgenden Formel (A): 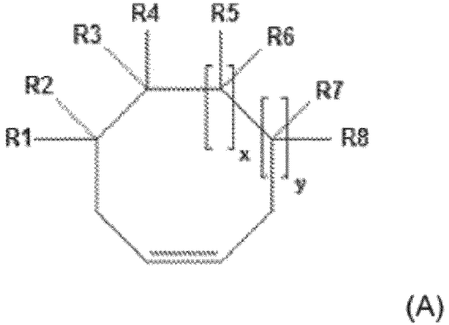
- wobei:
• die Gruppen R1, R2, R3, R4, R5, R6, R7 und R8, die identisch oder verschieden sind, aus einem Wasserstoffatom, einem Halogenatom, einer Alkylgruppe, einer Heteroalkylgruppe, einer Alkoxycarbonylgruppe oder einer Heteroalkoxycarbonylgruppe ausgewählt sind,
• mindestens eine der Gruppen R1 bis R8 mit mindestens einer anderen der Gruppen R1 bis R8 einen Teil desselben gesättigten oder ungesättigten Kohlenwasserstoffcyclus oder Heterocyclus bilden kann, und
• mindestens eines der Paare (R1,R2), (R3,R4), (R5,R6) und (R7,R8) eine Oxogruppe sein kann;
• x und y wie in einem der vorhergehenden Ansprüche definiert sind; und
- gegebenenfalls mindestens einer Verbindung der
Formel (B): 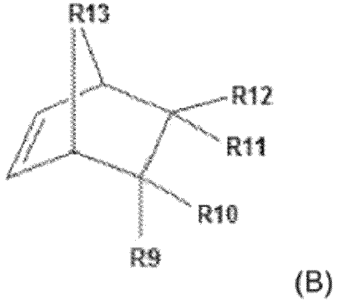 wobei:
• die Gruppen R9, R10, R11 und R12, die gleich oder verschieden sind, aus einem Wasserstoffatom, einem Halogenatom, einer Heteroalkylgruppe, einer Alkoxycarbonylgruppe und einer Heteroalkoxycarbonylgruppe ausgewählt sind,
• mindestens eine der Gruppen R9 bis R12 mit mindestens einer anderen der Gruppen R9 bis R12 einen Teil desselben gesättigten oder ungesättigten Cyclus oder Heterocyclus bilden kann; und
• die Gruppe R13 CH₂, O, S, C(=O) oder NR₀ ist, wobei R₀ eine Alkylgruppe mit 1 bis 22 Kohlenstoffatomen ist;
für eine Reaktionszeit von 2 bis 24 h und bei einer Temperatur von 20 bis 60 °C; und anschließend
gegebenenfalls einen Schritt der selektiven Hydrierung von Doppelbindungen des Polymers aus Schritt I), das zwei terminale Epoxygruppen aufweist; und anschließend
II) einen Schritt der Dithiocarbonisierung des im vorhergehenden Schritt erhaltenen Produkts durch eine Umsetzung mit Kohlenstoffdisulfid (CS₂) in Gegenwart einer Lithiumhalogenverbindung bei einer Temperatur von 20 bis 60 °C.

7. Herstellungsverfahren nach Anspruch 6, wobei:
- das Stoffmengenverhältnis des Kettenübertragungsmittels der Formel (C1) zur Verbindung der Formel (A) oder zur Summe der Verbindungen der Formeln (A) und (B), wenn die Verbindung der Formel (B) vorhanden ist, 1·10⁻³ bis 1,0 beträgt, oder
- das Stoffmengenverhältnis des Kettenübertragungsmittels der Formel (C2) zur Verbindung der Formel (A) oder zur Summe der Verbindungen der Formeln (A) und (B), wenn die Verbindung der Formel (B) vorhanden ist, 0,5·10⁻³ bis 0,5 beträgt.

8. Zweikomponentenzusammensetzung, umfassend:
- in einer ersten Kammer mindestens ein zwei terminale Dithiocyclocarbonatgruppen umfassendes Kohlenwasserstoffpolymer nach einem der Ansprüche 1 bis 5 oder wie nach dem Herstellungsverfahren von Anspruch 6 erhalten und
- in einer zweiten Kammer mindestens eine Verbindung, die mindestens eine Amingruppe umfasst.

## Claims

1. A hydrocarbon polymer comprising two dithiocyclocarbonate end groups, said hydrocarbon polymer being of formula (1) below: 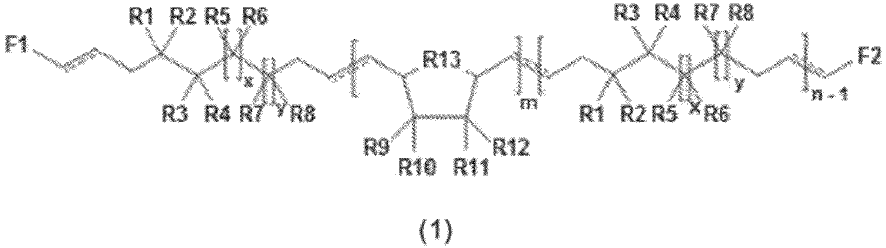 wherein:
• each carbon-carbon bond of the denoted chain 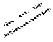 is a double bond or a single bond;
• groups R1, R2, R3, R4, R5, R6, R7 and R8, which may be identical or different, are chosen from a hydrogen atom, a halogen atom, an alkyl group, a heteroalkyl group, an alkoxycarbonyl group or a heteroalkoxycarbonyl group,
• at least one of groups R1 to R8 possibly forming part of the same saturated or unsaturated hydrocarbon-based ring or heterocycle, with at least another from groups R1 to R8;
• at least one of pairs (R1,R2), (R3,R4), (R5,R6) and (R7,R8) possibly being an oxo group;
• x and y, which may be identical or different, are integers ranging from 0 to 5;
• groups R9, R10, R11 and R12, which may be identical or different, are chosen from a hydrogen atom, a halogen atom, an alkyl group, a heteroalkyl group, an alkoxycarbonyl group or a heteroalkoxycarbonyl group,
• at least one of groups R9 to R12 possibly forming part of the same saturated or unsaturated hydrocarbon-based ring or heterocycle, with at least another from groups R9 to R12;
• the group R13 is CH₂, O, S, C(=O) or NR₀, R₀ being an alkyl group comprising from 1 to 22 carbon atoms; and
• n is an integer greater than or equal to 2 and m is an integer greater than or equal to 0, the molar ratio m:n ranging from 0:100 to 90:10, n and m being such that the number-average molar mass Mn of the hydrocarbon polymer of formula (1) ranges from 500 to 50000 g/mol, and the polydispersity (PDI) of the hydrocarbon polymer of formula (1) ranges from 1.0 to 3.0;
• F1 is represented by the following formula: 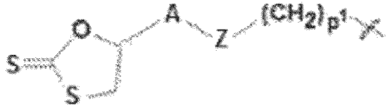
• and F2 is represented by the following formula: 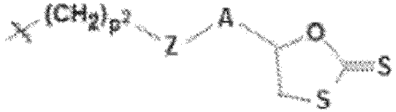 wherein:
A is a C1-C9 alkylene group;
Z is such that the divalent group -A-Z- is the group -A-C(=O)O- or -A-OC(=O)- and preferably -A-OC(=O)-;
p1 and p2, which may be identical or different, each represent an integer equal to 0, 1, 2 or 3.

2. Hydrocarbon polymer comprising two dithiocyclocarbonate end groups as claimed in claim 1, **characterized in that** it has a number-average molar mass Mn ranging from 600 to 45000 g/mol.

3. Hydrocarbon polymer comprising two dithiocyclocarbonate end groups as claimed in claim 1 or 2, **characterized in that** Z is such that the divalent group -A-Z- is group -A-OC(=O)-, and/or p1 = p2 = 0, and/or A is the methylene group and/or groups R1 to R8 are each a hydrogen atom.

4. Hydrocarbon polymer comprising two dithiocyclocarbonate end groups as claimed in any one of claims 1 to 3, **characterized in that** x=y=1.

5. Hydrocarbon polymer comprising two dithiocyclocarbonate end groups as claimed in any one of claims 1 to 4, **characterized in that** its main chain is saturated.

6. A process for preparing at least one hydrocarbon polymer comprising two dithiocyclocarbonate end groups, **characterized in that** it comprises:
I) a step of ring-opening metathesis polymerization, in the presence:
- of at least one metathesis catalyst,
- of at least one mono- or di-epoxidised chain-transfer agent of formula (C1) or (C2) below: 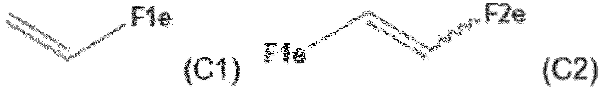 wherein:
• F1e is represented by the following formula: 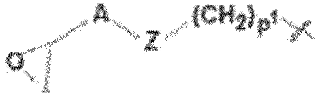
• and F2e is represented by the following formula: 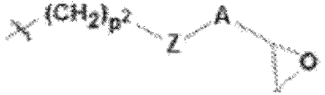
• A, Z, p1 and p2 of formulae F1e and F2e are as defined in any one of the preceding claims,
• the bond 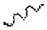 is a carbon-carbon single bond geometrically oriented on one side or the other relative to the double bond (cis or trans) in formula (C2);
- of at least one compound of formula (A) below: 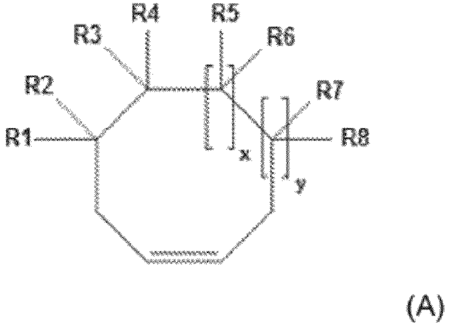 wherein:
• groups R1, R2, R3, R4, R5, R6, R7 and R8, which may be identical or different, are chosen from a hydrogen atom, a halogen atom, an alkyl group, a heteroalkyl group, an alkoxycarbonyl group or a heteroalkoxycarbonyl group,
• at least one of the groups R1 to R8 possibly forming part of the same saturated or unsaturated hydrocarbon-based ring or heterocycle, with at least one other of the groups R1 to R8; and
• at least one of pairs (R1,R2), (R3,R4), (R5,R6) and (R7,R8) possibly being an oxo group;
• x and y are as defined in any one of the preceding claims; and
of optionally at least one compound of formula (B): 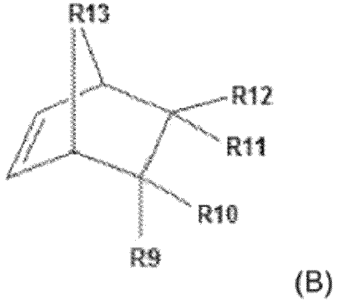 wherein:
• the groups R9, R10, R11 and R12, which may be identical or different, are chosen from a hydrogen atom, a halogen atom, a heteroalkyl group, an alkoxycarbonyl group and a heteroalkoxycarbonyl group,
• at least one of the groups R9 to R12 possibly forming part of the same saturated or unsaturated ring or heterocycle, with at least one other of the groups R9 to R12; and
• the group R13 is composed of CH₂, O, S, C(=O) or NR₀, R₀ being an alkyl group comprising from 1 to 22 carbon atoms;
for a reaction time ranging from 2 to 24 h and at a temperature ranging from 20 to 60°C; then
a step of selective hydrogenation of the double bonds of the polymer obtained in step I) containing two terminal epoxy groups; then II) a step of dithiocarbonation of the product obtained i the preceding step by reaction with carbon disulphide (CS₂) in the presence of a halogenated lithium compound, at a temperature ranging from 20 to 60 °C.

7. The preparation process as claimed in claim 6, said process being such that:
- the molar ratio of the CTA of formula (C1) to the compound of formula (A), or to the sum of the compounds of formulae (A) and (B) if the compound of formula (B) is present, ranges from 1.10⁻³ to 1.0 or
- the molar ratio of the CTA of formula (C2) to the compound of formula (A), or to the sum of the compounds of formulae (A) and (B) if the compound of formula (B) is present, ranges from 0.5.10⁻³ to 0.5.

8. A two-component composition comprising:
- in a first compartment, at least one hydrocarbon polymer comprising two dithiocyclocarbonate end groups as claimed in any one of claims 1 to 5 or as obtained by the preparation process of claim 6, and
- in a second compartment, at least one compound comprising at least one amine group.
